## Europäisches Patentamt

## European Patent Office

(19)

## Office européen des brevets

(11) Numéro de publication: **0 104 991**

**B1**

(12)

# FASCICULE DE BREVET EUROPÉEN

(45) Date de publication du fascicule du brevet:
18.03.87

(51) Int. Cl.⁴: **H 04 L 11/20**

(21) Numéro de dépôt: **83401817.8**

(22) Date de dépôt: **16.09.83**

(54) **Réseau local hybride de communication en modes circuit et paquet à boucle portant un multiplex temporel.**

(30) Priorité: **24.09.82  FR 8216632**

(43) Date de publication de la demande:
**04.04.84 Bulletin 84/14**

(45) Mention de la délivrance du brevet:
**18.03.87 Bulletin 87/12**

(84) Etats contractants désignés:
**BE DE FR GB IT NL**

(56) Documents cité:
**EP-A-0 054 077**
**FR-A-2 406 916**

**INTERNATIONAL SYMPOSIUM ON SUBSCRIBER LOOPS AND SERVICES, 20-24 septembre 1982, Toronto, Canada, pages 35-39, IEEE, New York, US. R. RENOULIN: "An integrated service local network for distributed access of heterogeneous terminals made for firm management the project carthage"**
**INTERNATIONAL SYMPOSIUM ON SUBSCRIBER LOOPS AND SERVICES**
**NATIONAL TELECOMMUNICATIONS CONFERENCE, vol. 3, 27-29 novembre 1979, Washington, DC, pages 46.6.1-46.6.8, IEEE, New York, US. M. J. ROSS et al.: "Approaches to the integration of voice and data telecommunications"**
**INTERNATIONAL CONFERENCE ON**

(73) Titulaire: **L'Etat Français, représenté par le Ministre des P.T.T. (Centre National d'Etudes des Télécommunications), 38-40 rue du Général Leclerc, F-92131 Issy-Les-Moulineaux (FR)**
Titulaire: **Etablissement Public de Diffusion dit "Télédiffusion de France", 21-27 rue Barbès, F-92120 Montrouge (FR)**

(72) Inventeur: **Renoulin, Roger Jean-Marie, 29, rue Réné Jean Magneux Thorigné-sur-Vilaine, F-35510 CessonSévigné (FR)**
Inventeur: **Le Franc, Jean-Pierre, 18, rue de Brest Apt. B 234, F-35000 Rennes (FR)**
Inventeur: **Takhedmit, Tahar, 12, rue Saint Yves, F-35000 Rennes (FR)**

(74) Mandataire: **Le Guen, Louis François, Cabinet Louis Le Guen 1, avenue Edouard VII B.P. 91, F-35802 Dinard Cédex (FR)**

(56) Documents cité: (suite)
**COMMUNICATIONS, vol. 2, 4-7 juin 1978, Toronto, Canada, pages 20.3.1-20.3.5, IEEE, New York, US. H. MIYAHARA et al.: "Integrated switching with variable frame and packet"**
**NATIONAL TELECOMMUNICATIONS CONFERENCE, 1-3 décembre 1975, New Orleans, Louisiana, vol. 2, pages 42.12-42.17, IEEE, New York, US. G. J. COVIELLO et al.: "Integration of circuit/packet switching by a SENET (slotted envelope network) concept"**

## Description

La présente invention concerne un réseau local hybride de communication en mode circuit et mode paquet entre des terminaux synchrones utilisant une boucle portant un multiplex temporel, les communications en mode paquet étant commandées par un jeton.

Les réseaux locaux en boucle sont définis, par exemple dans les articles techniques suivants:

1) "An Introduction to Local Area Networks" par David D. Clark et autres, paru dans la revue américaine "Proceedings of the IEEE", vol. 66, n° 11, novembre 1978, pages 1499 et 1500;

2) "An experimental distributed switching system to handle bursty computer traffic" par W.D. Farmer et E.E. Newhall, paru dans le compte-rendu "Proc. ACM Symposium on Problems in the Optimization of Data Communications," octobre 1963, pages 31 à 34;

3) "A local-area communication network based on a reliable token-ring system" par W. Bux et autres, paru dans l'ouvrage "Local Computer Networks", IFIP, 1982, pages 69 à 82, et

4) "An integrated service local network for distributed access of heterogeneous terminals made for firm management the project carthage" par R. Renoulin, paru dans le compte-rendu de "International symposium on subscriber loops and services", 20-24 septembre 1982, Toronto, Canada.

La commande par jeton des communications en mode paquet est également connue et, par exemple, décrite dans les articles 2), 3) et 4) mentionnés ci-dessus.

Des réseaux hybrides ont, en dehors de l'article 4) mentionné ci-dessus, été évoqués dans les articles techniques suivants:

5) "Approaches to the integration of voice and data telecommunications" par M.J. Ross et C.M. Sidlo, paru dans le compte rendu "National Telecommunication Conference", vol 3, 27-29 novembre 1979, New York, NY,

6) "Integrated switching with variable frame and packet" par H. Miyahara et T. Hasegawa, paru dans le compte-rendu "International Conference on Communications", vol. 2, 4-7 juin 1978, Toronto, Canada,

7) "Integration of circuit/packet switching by a SENET (Slotted envelope network) concept", par G.J. Coviello et P.A. Vena, paru dans le compte-rendu "National Telecommunications Conference", vol. 2, 1-3 décembre 1975, New York, NY.

Dans l'article 7) ci-dessus, on considère les réseaux hybrides, mode circuit-mode paquet, d'une manière très générale, avec parmi les propositions examinées, celle qui utilise une trame maîtresse comportant des régions à commutation circuit et des régions à commutation paquet. Les trames maîtresses sont périodiques, la période étant par exemple de 10 à 20 ms. Cette période est trop longue pour transmettre de la parole en modulation MIC, telle qu'elle est transmise dans les réseaux classiques existants. Dans l'article 6) ci-dessus, on envisage un réseau intégré dans lequel la capacité de la voie est divisée en deux parties: l'une pour la commutation en mode circuit et l'autre pour la commutation en mode paquet. On prévoit des trames dont une partie est affectée à un trafic et l'autre à l'autre trafic et, la partie paquet risquant de ne pas être remplie, on prévoit d'utiliser des trames de longueur variable, ce qui n'est pas non plus compatible avec la transmission MIC.

Dans le brevet EP-A-0 054 077, il est aussi décrit un système hybride à trames non synchrones, la synchronisation n'existant qu'au niveau bit. Certaines trames sont affectées à la transmission de paquets, le droit d'émettre étant donné par un jeton d'un bit; d'autres trames sont affectées à la transmission de groupes d'echantillons de parole comme dans le TASI. Ce système n'est pas on plus compatible avec la transmission MIC.

Par ailleurs, un réseau de communication entre terminaux de téléinformatique utilisant le mode circuit sur un multiplex temporel est décrit dans le brevet EP-A-0 036 808.

On rappelle que, par multiplex primaire, on désigne plus particulièrement un multiplex temporel à 32 voies. Un tel multiplex est décrit dans la plaquette publiée le 20 septembre 1973 par la "Conférence Européenne des Administrations des Postes et Télécommunications" et intitulée (en français) "Spécifications du système multiplex MIC du premier ordre". Mais il doit être entendu que des multiplex primaires proches de celui-là, tel que le multiplex à 24 voies du type dit "anglo-saxon", pourraient également être utilisés dans le réseau suivant l'invention.

Chaque trame d'un multiplex primaire à 32 voies a une durée de 125 microsecondes et est formée de 32 intervalles de temps iT0 à iT31. Chaque intervalle de temps se compose de huit temps élémentaires w1 à w8 servant chacun à transmettre un bit 1 ou 0. Dans chaque trame, l'iT0 est réservé au verrouillage de trame. Dans le cas où, avec un tel multiplex, on utilise une signalisation voie par voie, les trames sont regroupées en multitrames qui chacune contiennent seize trames consécutives numérotées de 0 à 15 et le signal de verrouillage de multitrame est 0000, ce signal occupant les quatre premiers temps élémentaires w1 à w4 du premier intervalle de temps iT16 de la trame N° 0. Par ailleurs, l'iT16 de chaque trame sert à transmettre la signalisation voie par voie. Les autres iT1 à iT15 et iT17 à iT31 sont utilisés pour transmettre, en principe, des échantillons de parole.

Dans le brevet EP-A-0 036 808, on a prévu une autre structure de multitrame. Chaque multitrame comprend 20 trames de multiplex primaire. Dans chaque trame, l'iT0 contient normalement l'information de synchronisation de trame. Dans chaque multitrame, l'intervalle de temps iT16 de la trame 0 contient la synchronisation multitrame. Les intervalles de temps iT16 des trames N° 1 à N° 19 sont affectés à des échanges d'informations de service. Dans chaque trame, les intervalles de temps iT1 à iT15 et iT17 à iT31 sont alloués à des échanges de données. Ainsi, les messages de signalisation d'établissement, de rupture des communications, de supervision, etc., qui sont ainsi transmis dans le canal correspondant à l'iT16 de chaque trame, peuvent avoir une taille variable. Le choix de multitrame de vingt trames permet de disposer d'une synchronisation de multitrame servant à cadrer le débit des messages de signalisation par rapport à la trame N° 0 pour les messages d'interrogations émis à partir de l'unité de commande vers les équipements d'accès et par rapport à la trame N° 10 pour les messages de réponse émis à partir des équipements d'accès vers l'unité de commande. Par ailleurs, le choix de vingt trames par multitrame permet de multiplexer des canaux de 2400 bauds, ou évidemment des canaux de 1200 bauds, tout en permettant de totaliser un débit de 64 kbit/s, dont 48 kbit/s utiles pour conserver une compatibilité avec les enveloppes définies dans l'avis X50 du CCITT. Enfin, l'échange des messages de signalisation permet d'affecter dans chaque multitrame la ou les trames et l'iT dans chacune de ces trames dans lequel se trouve l'information relative à un sens de communication.

Un objet de la présente invention consiste a prevoir un reseau de communication à multiplex temporel à multitrames, capable de fonctionner en mode circuit d'une manière similaire à celui qui est décrit dans le brevet EP-A-0 036 808, mentionné ci-dessus, mais qui permette également de fonctionner en mode paquet avec commande par jeton. Un tel réseau hybride offre l'avantage de pouvoir adapter la ressource de transmission constituée par le multiplex temporel à la transmission de messages et notamment de messages à caractere sporadique.

Les trames utilisées dans le réseau ne sont plus des trames de multiplex primaire mais des trames d'une durée par exemple de 125 microsecondes, chacune divisée en 128 intervalles de temps, lesquels sont donc plus courts que dans le multiplex primaire.

Comme dans l'article 4) mentionné ci-dessus, il est prévu un réseau local hybride de communication en mode circuit et mode paquet entre des terminaux utilisant une boucle portant un multiplex, les communications en mode paquet étant commandée par un jeton, l'en-tête de chaque paquet comprenant l'adresse de la station destinataire et l'adresse de la station origine, dans lequel le multiplex temporel est arrangé en multitrames de $\underline{M}$ trames 0 à (M-1), chaque trame comprenant P intervalles de temps iT0 à iT(P-1) étant affectée à la transmission d'un paquet par trame, dans chaque trame l'iT0 contenant le motif de synchronisation de la trame, l'iT1 contenant l'octet de jeton du paquet de la trame, les iT2 à iTh contenant l'en-tête dudit paquet, puis les iT(h+1) à iTx contenant les données utiles dudit paquet et, enfin, les iT(x+1) à iT(P-1) contenant des données de communication de type circuit.

Le réseau comprend des unités de contrôle de grappe servant chacune d'interface entre une grappe de terminaux de différents types et la boucle, et une unité de contrôle de boucle, les messages de service et de supervision entre les unités de contrôle de grappe, d'une part, et l'unité de contrôle de boucle, d'autre part, étant échangés en mode paquet.

Un objet de l'invention consiste à prévoir un réseau de ce type avec de nombreuses possibilités de fonctionnement rendant le réseau complètement opérationnel.

Pour atteindre cet objectif, ainsi que d'autres, le réseau a des caractéristiques qui font l'objet des revendications jointes. Des combinaisons de moyens permettant de mettre en oeuvre un tel réseau sont également décrites dans les revendications jointes.

Les caractéristiques de l'invention apparaîtront plus clairement à la lecture de la description suivante d'un exemple de réalisation, ladite description étant faite en relation avec les dessins joints, parmi lesquels:

la Fig. 1 est un bloc-diagramme schématique d'un réseau du type de celui de l'article 4) ci-dessus,

les Figs. 2 et 3 sont des diagrammes temporels illustrant l'utilisation d'un multiplex temporel du réseau de la Fig. 1,

la Fig. 4 est un bloc-diagramme d'une unité de contrôle de grappe UCG suivant l'invention,

la Fig. 5 est un bloc-diagramme du circuit de base de temps de l'UCG de la Fig. 4,

la Fig. 6 est un bloc-diagramme du circuit décodeur d'en-tête de l'UCG de la Fig. 4,

la Fig. 7 est un bloc-diagramme du circuit de réception de l'UCG de la Fig. 4,

la Fig. 8 est un bloc-diagramme du circuit d'émission de l'UCG de la Fig. 4,

la Fig. 9 est un bloc-diagramme du circuit générateur d'en-tête de l'UCG de la Fig. 4,

la Fig. 10 est un bloc-diagramme du circuit de multiplexage de l'UCG de la Fig. 4,

la Fig. 11 est un bloc-diagramme simplifié du circuit des automates de l'UCG de la Fig. 4,

la Fig. 12 est un diagramme des temps définissant des signaux de temps utilisés dans le circuit des automates de la Fig. 11,

la Fig. 13 est un graphe illustrant le fonctionnement du circuit des automates de la Fig. 11, et

la Fig. 14 est un bloc-diagramme d'un circuit de bouclage suivant l'invention utilisable dans l'unité de contrôle de boucle de la Fig. 1.

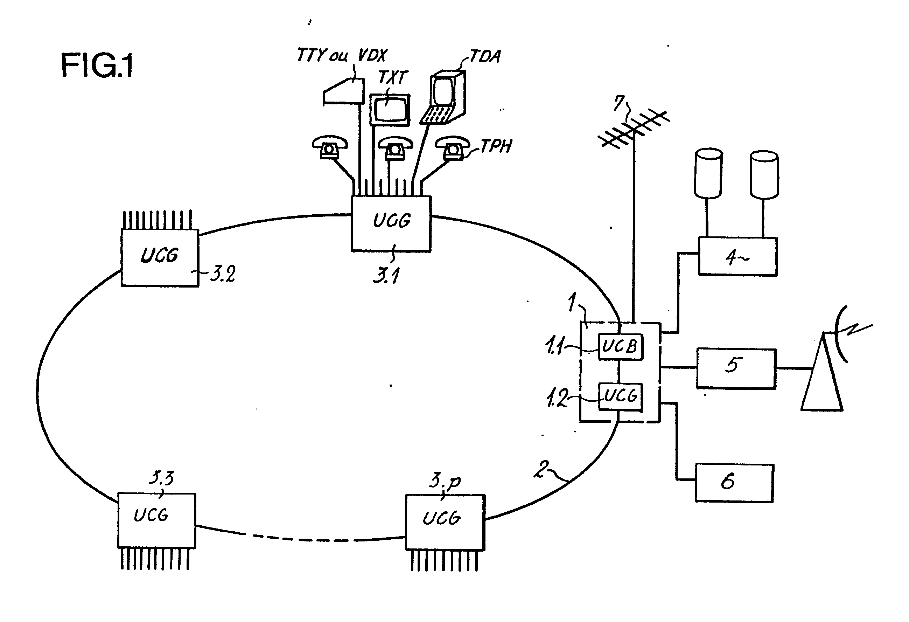

La Fig. 1 représente un réseau comprenant une station centrale de commande 1 relié par une boucle 2 transmettant le multiplex temporel, suivant l'invention, à une pluralité de stations secondaires 3.1 à 3.p desservant chacune une grappe de terminaux. Chaque station secondaire est reliée à un ou plusieurs terminaux qui peuvent comprendre des téléphones TPH, des téléimprimeurs TTY, des récepteurs de télétexte TXT ou de vidéotex VDX, des terminaux de données TDA, etc., ces terminaux ayant évidemment des caractéristiques de fonctionnement différentes d'un type à un autre.

La station centrale est, par ailleurs, reliée à une pluralité de réseaux externes privés ou publics de communication, tel qu'un réseau TRANSPAC 4, un réseau TRANSMIC 5, un réseau de commutation téléphonique temporel 6 et une antenne de réception de télévision 7. Ainsi, le réseau local, suivant l'invention, permet d'établir des communications entre les terminaux desservis par les stations secondaires 3.1 à 3.p, ou avec des terminaux extérieurs au réseau local à travers la station centrale 1. Pour des raisons qui seront développées dans la suite la station de commande centrale a deux coupleurs 1.1 et 1.2 d'accès à la boucle 2. Le coupleur 1.1 contient notamment une unité de contrôle de boucle UCB qui supervise les unités de contrôle de grappe UCG contenues dans les stations secondaires ou coupleurs 3.1 à 3.p et qui leur transmet la signalisation. Le coupleur 12 contient une unité de contrôle de grappe UCG et traite les communications des stations de la boucle avec les réseaux externes 4 è 7.

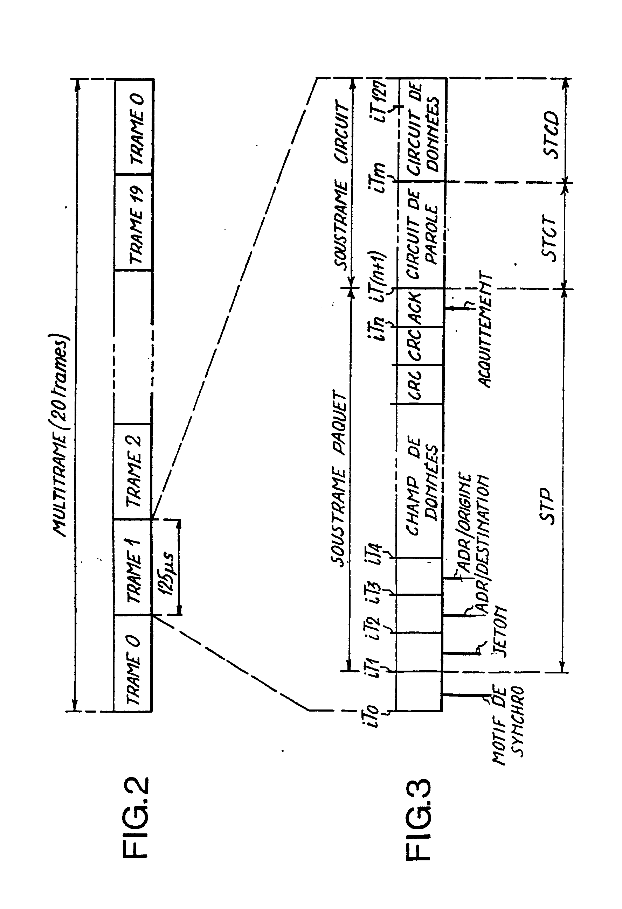

A la Fig. 2, on a représenté un diagramme temporel du multiplex temporel utilisé dans le réseau de la Fig. 1. Une multitrame comprend 20 trames N° 0 à N° 19. Chaque trame N° 0 à N° 19 a une durée de 125 microsecondes divisée en 128 intervalles de temps iT0 à iT127. L'allocation d'un iT de rang prédéterminé par trame constitue un canal à 64 kbit/s et peut donc transmettre une conversation téléphonique. L'organisation des trames en multitrames de 20 trames permet, en allouant un, deux,... iT, toutes les multitrames, d'offrir des canaux à 2400 bit/s, 4800 bit/s,..., conformément à la norme X50. Toutefois, comme on le verra dans la suite, la structure de chaque trame permet également de transmettre des données en mode paquet.

La synchronisation de ce multiplex est assurée par un mot de synchronisation porté par l'iT0 de chaque trame. Dans l'exemple de réalisation décrit, l'iT0 des trames de rang pair dans la supertrame a réellement une structure d'octet de synchronisation, tandis que l'iT0 des trames de rang impair contient un octet correspondant au numéro de cette trame. Donc l'iT0 des trames de rang pair permet de les compter et d'en déduire la synchronisation de supertrame.

En pratique, chaque trame est subdivisée en trois sous-trames successives, la première STP comprend les intervalles de temps iT1 à iT$(n+1)$ est réservée aux communications en mode paquet, la seconde STCT, qui comprend les intervalles de temps iT$(n+2)$ à iTm, est réservée aux communications téléphoniques et la troisième STCD, qui comprend les intervalles de temps iT$(m+1)$ à iT127, est réservée aux transmissions de données en mode circuit.

D'une manière générale, les communications téléphoniques transmises dans la sous-trame STCT et les communications de données en mode circuit transmises dans la sous-trame STCD sont, dans l'exemple décrit, traitées comme dans le concentrateur du brevet FP 0 036 808, sauf en ce qui concerne la signalisation et la supervision. En effet, comme on le verra dans la suite, tous les messages de signalisation et de supervision y sont traités sous la forme de communications en mode paquet transmises dans la sous-trame STP, ces messages étant transmis de l'unité UCG 1.2 ou des unités UCG 3.1 à 3.n vers l'unité UCB 1.1 ou vice versa. Pour chaque communication en mode circuit, l'allocation d'un intervalle de temps iTx et éventuellement d'un certain nombre de trames à une communication est gérée par l'unité centrale de gestion de la station centrale 1. Cette unité centrale de gestion a donc en mémoire la carte des diverses allocations.

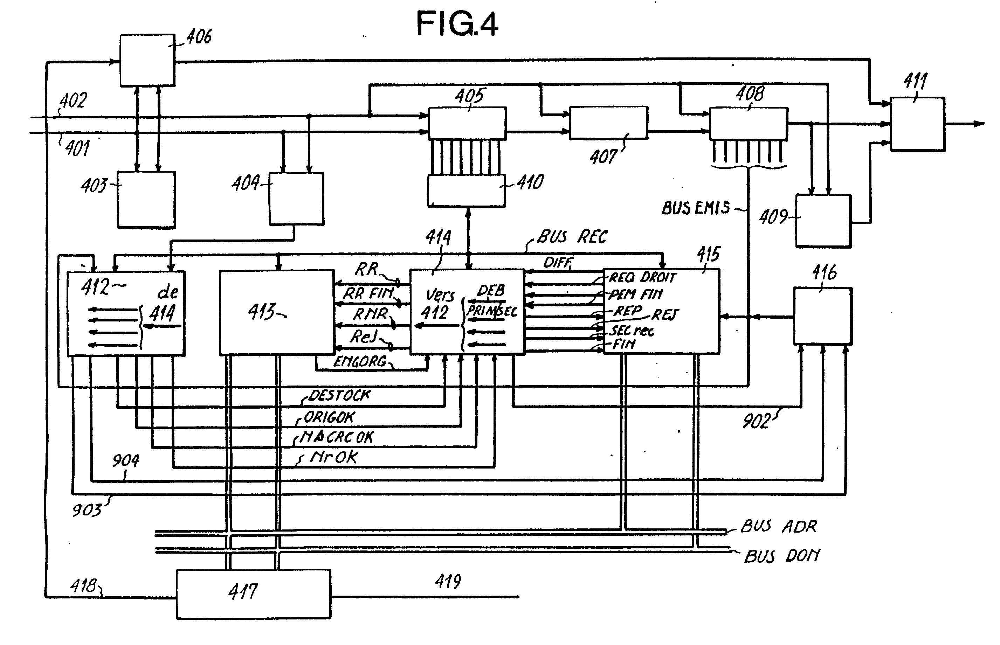

On va maintenant décrire, en relation avec la Fig. 3, la composition d'un sous-trame STP.

Un sous-trame STP comprend:

- l'iT1 qui contient l'octet jeton, dont on verra dans la suite toutes les utilisations envisagées dans le réseau suivant l'invention,
- l'iT2 dont l'octet identifie l'adresse de la station destinatrice du paquet dans la boucle du réseau,
- l'iT3 dont l'octet identifie l'adresse de la station origine du paquet dans la boucle du réseau,
- les intervalles de temps iT4 à iT$(n-3)$ qui contiennent les données utiles du paquet ou segment de paquet transmis dans la sous-trame STP considérée,
- les intervalles de temps iT$(n-2)$ et iT$(n-1)$ dont les octets transmettent la séquence de contrôle de trame, c'est à dire ici de sous-trame, conforme à l'avis V41 du CCITT, et
- l'iTn qui contient un octet d'acquittement émis par la station destinatrice.

Il apparaît que les intervalles de temps iT1 à iT4 constituent un en-tête de paquet qui suit immédiatement un signal de synchonisation sous la forme de l'iT0. On retrouve donc une configuration identique à celle qui a été décrite dans le brevet FR 2 313 825 et qui est maintenant bien connue sous le nom de système de diffusion de données DIDON (lequel est notamment utilisé pour diffuser le système de télétexte ANTIOPE). On verra, dans la suite, comment cette structure sera utilisée dans le réseau de l'invention pour diffuser des données.

Dans la trame de la Fig. 3, la répartition entre les trois sous-trames STP, STCT et STCD est, suivant l'invention, dynamiquement variable. Sous une forme concrète, les valurs de $n$ et de $m$ sort déterminées par la station de commande centrale 1. En ce qui concerne $m$, comme on l'a mentionné ci-dessus, l'allocation des communications en mode circuit étant faite par l'unité de commande de boucle UCB de la station 1, celle-ci procède, quand $m$ change, à une simple modification interne, sans avoir à en informer les stations secondaires. Par contre, la valeur $n$ définissant la taille maximale d'un paquet à insérer dans une trame, la commande de la variation de $n$ se traduit par une information que l'unité UCB doit transmettre a toutes les unités UCG. En pratique, dans l'exemple décrit, l'information concernant $n$ fait partie du contenu de l'intervalle de temps iT1. Il en résulte une grande souplesse d'exploitation du réseau, qui permet en fonction des trafics attendus en communications téléphoniques, de données en mode circuit et de données en mode paquet, d'ajuster la ressource aux demandes. Ainsi, aux heures de pointe du trafic téléphonique, l'UCB allongera la sous-trame STCT au détriment des deux autres. Par contre, aux heures de faible trafic téléphonique, elle allongera la sous-trame STP au détriment des deux autres.

En pratique, la taille $n$ de la sous-trame paquet STP ne sera pas choisie inférieure à 32 pour ne pas accroître exagérément l'importance relative de l'en-tête, plus la séquence de contrôle de trame, par rapport à la taille des données utiles du paquet.

En pratique, également, la taille $n$ de la sous-trame STP sera choisie parmi un nombre de format limité, tel

**0 104 991**

que (32k), $\underline{k}$ étant un entier pouvant varier de 1 à 3. Ainsi, trois configurations de iT1 ou, sous une autre forme, trois jetons permettent de définir $\underline{n}$. Dans la suite, ces trois jetons sont désignés par: "TAIL 32", "TAIL 64" et "TAIL 96".

Il faut noter que pour pouvoir allonger la sous-trame STP sans couper des communications du type circuit, le programme de l'unité de commande de boucle UCB de la station centrale permet, avant de déclencher la mesure, d'allouer les iT des nouvelles communications circuits au-delà du nouvel intervalle de temps iTn et, au besoin, de procéder à un réarrangement des iT alloués pour supprimer ceux qui demeureraient en-deçà du nouvel iTn.

On a mentionné ci-dessus que la taille minimale de la soustrame STP était de 32 iT, soit 26 iT capables de porter des informations utiles. Or les blocs données à transmettre en mode paquet sont généralement plus importants. Les unités UCB et UCG découpent donc chaque paquet à transmettre en segments qui, dans l'exemple décrit, sont transmis dans les sous-trames STP de trames successives du multiplex. Il en résulte que l'on peut distinguer quatre types de segments de paquet: dans un message composé de plusieurs segments, le segment constituant le début du bloc ou message, appelé "segment de début", des segments intermédiaires appelés "segment de suite", le segment constituant la fin du bloc, appelé "segment de fin", et, dans le cas d'un message assez court pour ne comporter qu'un seul segment, celui-ci est désigné par "segment unique".

Ces quatre types de segments sont identifiés par quatre jetons différents qui sont respectivement "PRND". "PCRT". "PFIN" et "PRD". Une liste des jetons utilisés dans l'exemple de réalisation décrit est donnée dans le tableau IV ci-après. Afin de poursuivre plus facilement la présente description, on va donner immédiatement les significations de ceux-ci.

Le jeton "DISC" est un jeton de commande qui est transmis par l'unité de commande de boucle UCB, située au point d'accès 1.1, pour suspendre le fonctionnement d'une unité UCG d'une station secondaire. Ce jeton de commande adressé à une unité UCG commute celle-ci en état de supervision sur lequel seule l'unité UCB peut ensuite agir.

Le jeton "TST" est un jeton de commande qui est transmis par l'unité UCB à une unité UCG, déjà en état de supervision, pour lui ordonner de déclencher une séquence de vérifications devant attester de son bon fonctionnement.

Le jeton "MES" est un jeton de commande transmis par l'unité UCB pour autoriser une unité UCG en état de supervision à se commuter en état de "mise en service".

Les jetons "TAIL 32", "TAIL 64" et "TAIL 96", déjà mentionnés ci-dessus. sont des jetons de commande qui sont transmis par l'unité UCB. Celle-ci diffuse, à toutes les unités UCG en service, le jeton approprié lors d'un changement de taille de la sous-trame STP en exploitation normale. Elle peut aussi transmettre le jeton approprié à une unité UCG pour l'informer de la taille de segment en vigueur, dans la procédure suivant la mise sous tension de cette station. Dans ce cas l'unité UCG à laquelle est destiné le jeton le renvoie à l'unité UCB qui peut alors vérifier que les paramètres "taille et droit de parole" n'ont pas été altérés par la transmission et que c'est bien l'unité UCG concernée qui lui a rendu le jeton. Si une altération est constatée, l'unité UCB réitère son émission, ce qui peut mettre en évidence un fonctionnement défectueux de l'unité UCG concernée et, dans ce cas, l'unité UCB peut la faire computer en état de supervision en lui envoyant un jeton DISC.

Le jeton "ACTIV" est un jeton de commande qui est transmis par l'unité UCB à une unité UCG quand, après lui avoir transmis les paramètres mentionnés ci-dessus d'accès à la boucle, elle s'est assurée que celle-ci est en mesure de participer à l'activité générale. Donc le jeton ACTIV est une autorisation qui provoque dans l'unité UCG la commutation en état de service à partir duquel elle peut entamme, le dialogue.

Le jeton "EVEIL" est un jeton de commande qui est transmis par une unité UCG à sa mise sous tension. En effet, les automates de procédure d'une unité UCG, lesquels seront décrits en détail dans la suite, sont initialisés à l'état 0 dès leur mise sous tension. Dans cet état, l'unité UCG ne peut reconnaître que les commandes provenant de l'unité UCB et le jeton "LIBR" indiquant une possibilité d'accès à la boucle. D'autre part, elle ne peut émettre que dans la zone d'en-tête puisqu'elle ignore les paramètres d'échange en vigueur. Aussi, dès qu'elle reconnaît le jeton LIBR, elle le remplace par le jeton EVEIL qu'elle fait suivre de l'adresse de l'unité UCB et de sa propre adresse pour réclamer son admission à l'activité générale. Il faut noter que l'unité UCG ne pourra effectivement avoir une activité normale qu'après avoir reçu les paramètres de taille, puis le jeton ACTIV de l'unité UCB.

Le jeton "LIBR" est un jeton proprement dit qui est émis par une unité UCG ou par l'unité UCB après l'émission du dernier segment d'un paquet qu'elle a émis, quand cette station ou l'unité UCB a été une station dite "primaire" dans la communication par paquet. Ce jeton signale ainsi que le canal paquet est disponible. Le jeton LIBR est également émis quand, dans l'unité considérée, une certaine temporisation a été dépassée.

Le jeton "PRES" est également un jeton proprement dit qui est émis par une unité UCG ou par l'unité UCB après l'émission du dernier paquet qu'elle a émis, quand l'unité UCG ou UCB est une unité dite "secondaire". On verra dans la suite la distinction qui est faite entre une station primaire et une station secondaire. Le jeton PRES émis par la station secondaire est destiné à la station primaire avec laquelle elle converse pour que cette station primaire puisse continuer la conversation en émettant à son tour.

Le jeton "PRD", qui se lit "premier-dernier", est émis par une unité UCG ou l'unité UCB pour indiquer que le message émis ne comporte qu'un seul segment qui est celui qui est mis dans la suite de la sous-trame STP. Ce jeton indique que, dans le début du champ de données qui suit l'en-tête, le premier octet contient une information sur le format, c'est à dire sur la longueur du champ de données qui peut ne pas remplir tout le reste de la sous-trame STP. Ce jeton peut initialiser un dialogue.

5

Le jeton "PRND", qui se lit "premier-non dernier, est émis par une unité UCB ou UCG pour indiquer que le message qui commence comprend plus d'un segment. La taille du segment qui suit PRND est évidemment maximale. Avec le jeton PRD mentionné ci-dessus, le jeton PRND est le seul à pouvoir initialiser un dialogue. Autrement dit, c'est sur réception d'un de ces deux jetons que les compteurs de numéros de segment sont initialisés.

Le jeton "PCRT", qui se lit "courant", est émis par une unité UCB ou UCG pour indiquer que le champ de données qui suit n'est ni le premier, ni le dernier du message. La taille du segment qui suit PCRT est maximale. Dans le champ de données qui le suit, le premier octet indique le numéro du segment.

Le jeton "PFIN", qui se lit "dernier", est émis par une unité UCB ou UCG pour indiquer que le champ de données qui suit est le dernier segment d'un message, ce segment pouvant ne pas remplir toute la sous-trame STP, si bien que la longueur du segment est indiquée dans le premier octet du paquet.

Le jeton "DIFF" indique que le message est diffusé à toutes les autres unités par une unité UCG ou UCB. A noter que l'on prévoit, de plus, dans l'octet d'adresse destinataire, une adresse spéciale que peut utiliser l'unité UCB pour effectuer une diffusion de message vers toutes les unités UCG. Ce jeton n'entraîne pas de passage en dialogue, car aucun acquittement n'est attendu.

Trois jetons "DID1, "DID2" et "DID3" signalent des messages diffusés du type DIDON, c'est à dire ayant une structure qui est décrite dans le brevet FR-A-2 313 825. Ces trois jetons n'entraînent pas, non plus, de passage en dialogue.

Dans le tableau IV, on a également fait figurer, pour chaque jeton, sa configuration, la configuration de son complément, l'instant T1 de sa validation, sa valeur transcodée en mot de quatre bits et la valeur de ce mot de quatre bits en code hexadécimal. On verra dans la suite ce que signifie le temps T1.

Le complément d'un jeton est émis, à la place du jeton correspondant, par l'unité UCB à chaque segment qu'elle voit passer sur la boucle. Il en résulte que chaque station doit être capable d'attribuer, après transcodage, la même signification à un jeton qu'à son complément. Il en résulte également que quand l'unité UCB voit passer un segment avec jeton complémenté, elle en déduit qu'il a fait plus d'un tour sur la boucle. Dans ce cas, elle l'élimine en émettant un jeton LIBR. En effet, le segment a été victime d'une erreur de transport pour une raison quelconque, ou bien la station destinatrice est indisponible. Sans son élimination par l'unité UCB, il continuerait à encombrer la boucle.

Dans le tableau IV, on a également fait figurer, les trois types de réponse que l'unité UCG ou UCB destinatrice peut insérer dans l'intervalle de temps iTn ou octet d'acquittement, en ce qui concerne ses quatre derniers bits. Le tableau IV montre également que ces réponses sont validées au temps T3 et qu'elles sont également transcodées, leur valeur décimale transcodée étant également indiquée. Les quatre permiers bits de l'octet d'acquittement contiennent le numéro du segment auquel la réponse s'applique.

La réponse "RR" est émise par l'unité réceptrice d'un segment quand celui-ci est correct, après vérification de sa séquence de contrôle de trame et de son numéro d'ordre.

La réponse "REJ" est émise par l'unité réceptrice d'un segment quand celui-ci est incorrect.

La réponse "RNR" est émise par l'unité réceptrice d'un segment quand cette station estime que sa mémoire de réception de données n'est pas susceptible de recevoir un autre segment.

Dans le cas d'un message diffusé, indiqué par l'un des jetons DIFF, DID1, DID2 et DID3, les stations réceptrices n'émettant aucune de ces réponses puisqu'elles n'ont pas à acquitter ce genre de message.

La définition des différents jetons et des différents acquittements ayant été donnée, on va maintenant décrire comment, d'une manière générale, une station en activité peut transmettre un message en mode paquet à une autre station sur la boucle sachant que chaque en-tête est analysé dans chaque unité UCG ou UCB que la trame traverse.

On suppose que l'unité d'une station a un message à transmettre, c'est à dire qu'elle est à l'état REQ, et qu'au passage d'une trame, elle constate que l'iT1 contient le jeton LIBR, elle lui substitue alors dans le même iT1 le jeton PRD ou PRND, suivi de l'adresse de l'unité destinatrice dans l'iT2, de sa propre adresse dans l'iT3, puis du texte et enfin de la séquence de contrôle de trame. Dans la communication qu'elle vient d'engager, la station prend le statut de station "primaire", c'est à dire qu'elle passe à l'état PRIM. Les unités suivantes, constatant que le jeton qu'elles voient passer n'est pas le jeton LIBR, comparent respectivement leurs adresses propres avec l'adresse de l'unité destinatrice contenue dans l'iT2 et, s'il n'y a pas coïncidence, elles ouvrent chacune une porte adéquate par lequel la sous-trame STP reçue est retransmise telle quelle sur la boucle. Par contre, s'il y a coïncidence, l'unité destinatrice concernée prend le statut d'unité "secondaire", c'est à dire qu'elle prend l'état SEC.

A l'état SEC, dès réception du premier segment, l'unité secondaire substitue alors à la sous-trame reçue, après l'iT0, un jeton PRES dans l'iT1, l'adresse de l'unité primaire dans l'iT2 et sa propre adresse dans l'iT3, et écrase le reste de la sous-trame. Ensuite, deux cas peuvent se présenter. Si l'unité secondaire n'a pas de message prêt à être transmis à l'unité primaire, après chaque segment, elle renvoie le même message commençant par le jeton PRES, mais dans le dernier octet de la sous-trame elle inclut la réponse adéquate RR, REJ ou RNR. Si elle a un message en attente pour l'unité primaire, elle envoie successivement les segments de son message comme si elle était une unité primaire, à la différence près qu'elle inclut dans le dernier octet l'acquittement adéquat concernant les segments reçus de l'unité primaire. Dans ce dernier cas, celle-ci place également dans le dernier octet, l'acquittement adéquat en ce qui concerne les segments reçus de l'unité secondaire.

Dans tous les cas, seule la station primaire peut réellement terminer le dialogue en envoyant un jeton LIBR.

**0 104 991**

Dans les tableaux ci-après, on a schématisé des trames successives composées de sous-trames STP, STCT et STCD, les sous-trames STP étant détaillées en ce qui concerne leurs en-têtes, ainsi que les séquences de contrôle de sous trame et les octets d'acquittement, échangés au cours de plusieurs types de communication. Dans ces tableaux, l'indication PRIM ou p, pour primaire, ou SEC ou s, pour secondaire, permet de reconnaître l'origine du segment, "aller" et "retour" distinguent les sous-trames émises et reçues par la station primaire, le numéro qui suit est celui du segment considéré, l'origine de la séquence de contrôle de trame est indiqué par "p" ou "s" placé derrière CRC et le message d'acquittement est précédé du numéro du segment acquitté et de "p" ou "s" suivant son origine. L'adresse de l'unité primaire est notée A et celle de l'unité secondaire est notée B. Enfin, les octets sans signification sont notés X.


**Exemple I de communication**

| PRIM | aller | 1 | PRND | B | A | 1 | ... | CRCp | X | STCT | STCD |
| SEC | retour | 1 | PRES | A | B | X | ... | X | 1pRR | STCT | STCD |

| PRIM | aller | 2 | PCRT | B | A | 2 | ... | CRCp | X | STCT | STCD |
| SEC | retour | 2 | PRES | A | B | X | ... | X | 2pRR | STCT | STCD |

| PRIM | aller | 3 | PCRT | B | A | 3 | ... | CRCp | X | STCT | STCD |
| SEC | retour | 3 | PRES | A | B | X | ... | X | 3pRR | STCT | STCD |

................................

| PRIM | aller | j | PFIN | B | A | j | ... | CRCp | X | STCT | STCD |
| SEC | retour | j | PRES | A | B | X | ... | X | jpRR | STCT | STCD |

| PRIM | | | PRES | B | A | X | ... | X | X | STCT | STCD |
| SEC | | | PRES | A | B | X | ... | X | X | STCT | STCD |

| PRIM | | | LIBR | ............ |

7

**Exemple II de communication**

| PRIM | aller | 1 | PRND | B | A | 1 | ... | CRCp | X | STCT | STCD |
| SEC | retour | 1 | PRES | A | B | X | ... | X | 1pRR | STCT | STCD |
| | | | | | | | | | | | |
| PRIM | aller | 2 | PCRT | B | A | 2 | ... | CRCp | X | STCT | STCD |
| SEC | retour | 2 | PRND | A | B | 1 | ... | CRCs | 2pRR | STCT | STCD |
| | | | | | | | | | | | |
| PRIM | aller | 3 | PCRT | B | A | 3 | ... | CRCp | 1sRR | STCT | STCD |
| SEC | retour | 3 | PCRT | A | B | 2 | ... | CRCs | 3pRR | STCT | STCD |
| | | | | | | | | | | | |
| PRIM | aller | 4 | PCRT | B | A | 4 | ... | CRCp | 2sRR | STCT | STCD |
| SEC | retour | 4 | PFIN | A | B | 3 | ... | CRCs | 4pRR | STCT | STCD |
| | | | | | | | | | | | |
| PRIM | aller | 5 | PFIN | B | A | 5 | ... | CRCp | 3sRR | STCT | STCD |
| SEC | retour | 5 | PRES | A | B | X | ... | X | 5pRR | STCT | STCD |
| | | | | | | | | | | | |
| PRIM | | | PRES | B | A | X | ... | X | X | STCT | STCD |
| SEC | | | PRES | A | B | X | ... | X | X | STCT | STCD |
| | | | | | | | | | | | |
| PRIM | | | LIBR | ............ | | | | | | | |

**Exemple III de communication**

| PRIM | aller | 1 | PRD | B | A | 1 | ... | CRCp | X | STCT | STCD |
| SEC | retour | 1 | PRES | A | B | X | ... | X | 1pRR | STCT | STCD |
| | | | | | | | | | | | |
| PRIM | aller | 2 | PRES | B | A | X | ... | X | X | STCT | STCD |
| SEC | retour | 2 | PRND | A | B | 1 | ... | CRCs | X | STCT | STCD |
| | | | | | | | | | | | |
| PRIM | aller | 3 | PRES | B | A | X | ... | X | 1sRR | STCT | STCD |
| SEC | retour | 3 | PCRT | A | B | 2 | ... | CRCs | X | STCT | STCD |
| | | | | | | | | | | | |
| PRIM | aller | 4 | PRES | B | A | X | ... | X | 2sRR | STCT | STCD |
| SEC | retour | 4 | PCRT | A | B | 3 | ... | CRCs | X | STCT | STCD |
| | | | | | | | | | | | |
| PRIM | aller | 5 | PRES | B | A | X | ... | X | 3sRR | STCT | STCD |

........................

0 104 991

```
SEC   retour j+1  PFIN  A  B  j  ..  CRCs X         STCT  STCD

PRIM  aller  j+2  PRES  B  A  X  ...  X       jsRR  STCT  STCD
SEC   retour j+2  PRES  A  B  X  ..¬  X       X     STCT  STCD

PRIM              LIBR  ................
```

**Exemple IV de communication**

```
PRIM  aller  1  PRD   B  A  1  ...  CRCp     X     STCT  STCD
SEC   retour 1  PRES  A  B  X  ...  X        REJ   STCT  STCD

PRIM  aller  2  PRES  B  A  X  ...  X        X     STCT  STCD
SEC   retour 2  PRES  A  B  X  ...  X        X     STCT  STCD

PRIM  aller  3  PRD   B  A  1  ...  CRCp     X     STCT  STCD
SEC   retour 3  PRES  A  B  X  ...  X        1pRR  STCT  STCD

PRIM            PRES  A  B  X  ...  X        X     STCT  STCD
SEC             PRES  A  B  X  ...  X        X     STCT  STCD

PRIM            LIBR  ................
```

**Exemple V de communication**

```
PRIM  aller  1  PRND  B  A  1  ...  CRCp     X     STCT  STCD
SEC   retour 1  PRES  A  B  X  ...  X        RNR   STCT  STCD

PRIM  aller  2  PRCT  B  A  2  ...  CRCp     X     STCT  STCD
SEC   retour 1  PRES  A  B  X  ...  X        X     STCT  STCD

PRIM            LIBR  .................
```

9

Le premier exemple concerne une communication où l'unité primaire est seule à transmettre. L'exemple II concerne une communication où les deux unités transmettent, le message transmis par A étant plus long que celui transmis par B. L'exemple III concerne une communication où l'unité B transmet un message plus long que l'unité A. L'exemple IV concerne une communication dans laquelle un segment a été rejeté et l'exemple V une communication dans laquelle l'unité B est engorgée.

Le fait que seule la station primaire peut libérer la boucle permet de donner le droit d'émettre aux différentes unités dans le sens de la boucle. D'autre part, si on limite à une communication le nombre de communications qu'une unité peut déclencher à chaque fois qu'elle reconnaît un jeton LIBR, il apparaît que cette procédure doit permettre d'assurer la récurrence du droite de parole et l'égalité entre les stations. Enfin, le nombre de segments qu'une unité peut émettre dans une communication est également limité à une valeur maximale ce qui limite l'occupation de la boucle par une unité.

L'exemple V montre également qu'une communication peut avoir sa durée allongée par les erreurs de transmission qui entraînent des répétitions de segments. En conséquence, il est prévu un nombre maximal REPMAX de répétitions de segments qui quand il est atteint entraîne par l'unité concernée l'arrêt de sa transmission, une unité primaire émettant alors un jeton LIBR et une unité secondaire un jeton PRES. Il faut toutefois noter que le nombre des erreurs devant être limité, les segments répétés ne sont pas décomptés du nombre maximal de segments qu'une unité peut émettre au cours d'une communication.

Pour chaque message reçu comportant un information utile, en dehors de l'en-tête, la durée des deux sous-trames STCT et STCD, qui suivent STP, permettent le calcul du RR ou REJ. Dans les exemples de communications mentionnés ci-dessus, on a supposé que le dernier paquet utile transmis donnait lieu à un acquittement, ce qui entraîne deux paquets avec jeton PRES avant la libération de la communication. On peut aussi faire fonctionner le système sans acquitte, les derniers paquets, à jetons PFIN ou PRD.

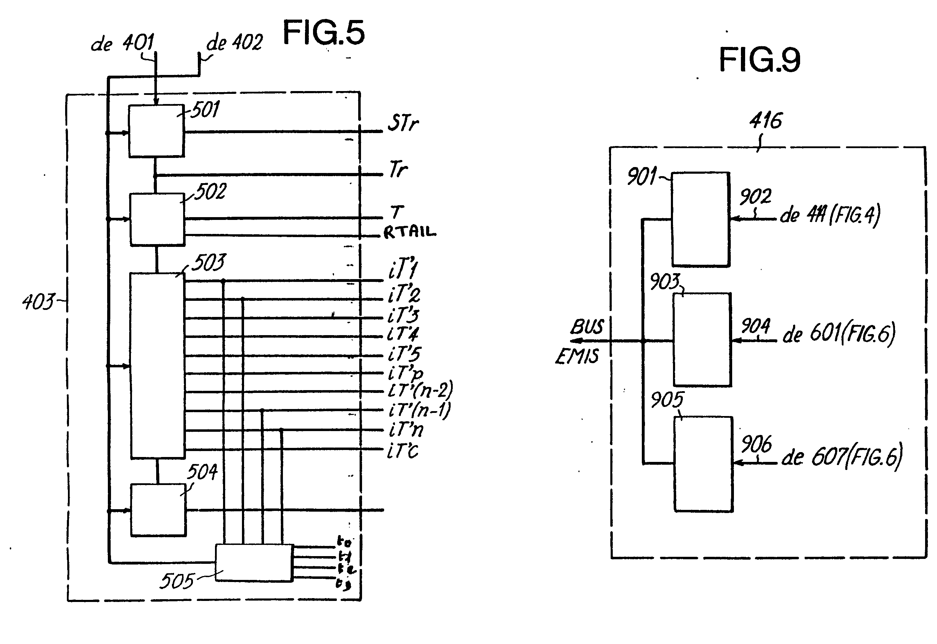

Dans le bloc-diagramme d'une unité UCG, montré à la Fig. 4, le fil 401 transmet en série les bits de données reçues et le fil 402 le signal d'horloge bit. Le fil 401 est relie a l'entrée d'un circuit de base de temps 403, à l'entrée d'un opérateu, CRC réception 404, à l'entrée d'un convertisseur série-parallèle 405 et à l'entrée d'un circuit de traitement des données circuit 406. Le fil d'horloge bit 402 est relié aux entrées d'horloge de la base de temps 403, de l'opérateur CRC réception 404, du convertisseur série-parallèle 405, d'un registre à décalage 407, d'un convertisseur parallèle-série 408 et d'un opérateur CRC émission 409.

Les circuits 405, 407 et 408 sont, en pratique, des registres à décalage ayant chacun la capacité d'un octet. Le registre 405 a, en plus de sa sortie série, une sortie parallèle qui lui permet de fonctionner en convertisseur série-parallèle. Le registre 408 a, en plus de son entrée série, une entrée parallèle qui lui permet de fonctionner en convertisseur parallèle-série. La sortie série du registre 405 est reliée à l'entrée série du registre 407 dont la sortie série est reliée à l'entrée série du registre 408. La sortie parallèle du registre 405 est reliée à l'entrée d'un registre tampon 410, dont le but est garder en mémoire un octet reçu pendant la réception de l'octet suivant. L'entrée de données du registre 408 est reliée à un bus d'émission BUS EMIS. La sortie série du registre 408 est reliée, d'une part, à l'entrée de données de l'opérateur CRC émission 409 et, d'autre part, à une entrée d'un multiplexeur 411 à trois entrées de données. Une autre entrée du multiplexeur 411 est reliée à la sortie du circuit de traitement de données circuit 406 et sa dernière entrée est reliée à la sortie de l'opérateur CRC émission 409.

La sortie du registre 410 est reliée à un bus de réception BUS REC auquel sont reliés un circuit de décodage d'en-tête 412, un circuit de réception de données 413, un circuit de commande 414 et un circuit d'émission 415. Le circuit de commande 414 est réalisé sous la forme d'un automate de procédure et, dans la suite, on le désignera indifféremment par circuit de commande ou automate. La sortie de l'opérateur CRC réception 404 est reliée à une entrée du circuit de décodage d'en-tête 412. La sortie de données du circuit d'émission 415 est reliée au bus d'émission BUS EMIS, lequel est encore relié à une entrée du circuit de décodage 412 et à la sortie d'un circuit générateur d'en-tête 416.

Le circuit de réception 413 est relié aux bus d'adresse BUS ADR et de données BUS DON d'un microprocesseur 417. Les bus d'adresse BUS ADR et de données BUS DON sont reliés au circuit d'émission 415. Le microprocesseur 417 est encore relié par une liaison de données 418 au circuit de traitement de données, circuit 406 et par une autre liaison de données 419 aux terminaux de données paquet que l'unité UCB dessert.

Un exemple de réalisation de la base de temps 403 est représentée plus en détail à la Fig. 5. Dans ce circuit, le fil 401 relié à l'entrée d'un automate de synchronisation 501 dont une sortie est reliée à un compteu, de bits 502 dont la sortie est reliée à l'entrée d'un compteur d'octets 503 dont la sortie est reliée à un circuit décodeur de rang de trames 504. Les entrées d'horloge des circuits 501 à 504 sont reliées au fil 402. Le compteur 503 est encore relié à un circuit traducteur 505.

L'automate de synchronisation 501 est un circuit du type PAL, mentionné dans le préambule, qui a pour objet de reconnaître les signaux de synchronisation de trame et de supertrame. Il a une sortie Tr délivrant le signal de synchronisation de trame au compteur 502 et une sortie Str délivrant le signal de synchronisation de supertrame. Les sorties Tr et Str sont reliées au circuit de traitement de données circuit 406.

Le compteur de bits 502 délivre au compteur d'octets 503 un signal tous les huits bits. Le compteur 503 a des sorties parallèles qui délivrent les signaux de temps iT'1, iT'2, iT'3, iT'4, iT'p, iT'-(n-2), iT'(n-1), iT'n et iT'c. La sortie iT'p est activée quand l'un des étages 5 à (n-3) de 503 est actif et la sortie iT'c est activée pendant tout le reste de la trame qui suit l'instant iT'n. En pratique, les sorties de 503 sont activées pendant que le registre 410 contient l'octet de même rang et non pas pendant la réception de et octet. Ainsi, à titre d'exemple, iT'3 est défini par un niveau qui passe à l'état bas à la fin du premier bit de l'octet iT4 de la trame reçue et qui repasse au niveau haut à la fin du quatrième bit de cet octet iT4. En pratique, également, les transferts ou activations provoqués par un iT' surviennent à la transition niveau bas-niveau haut.

Le compteur 502 est encore relié au circuit des automates par une liaison RTAIL qui lui transmet la valeur n définie comme on l'a indiqué ci-dessus par un jeton "TAIL 32", "TAIL 64" ou "TAIL 96".

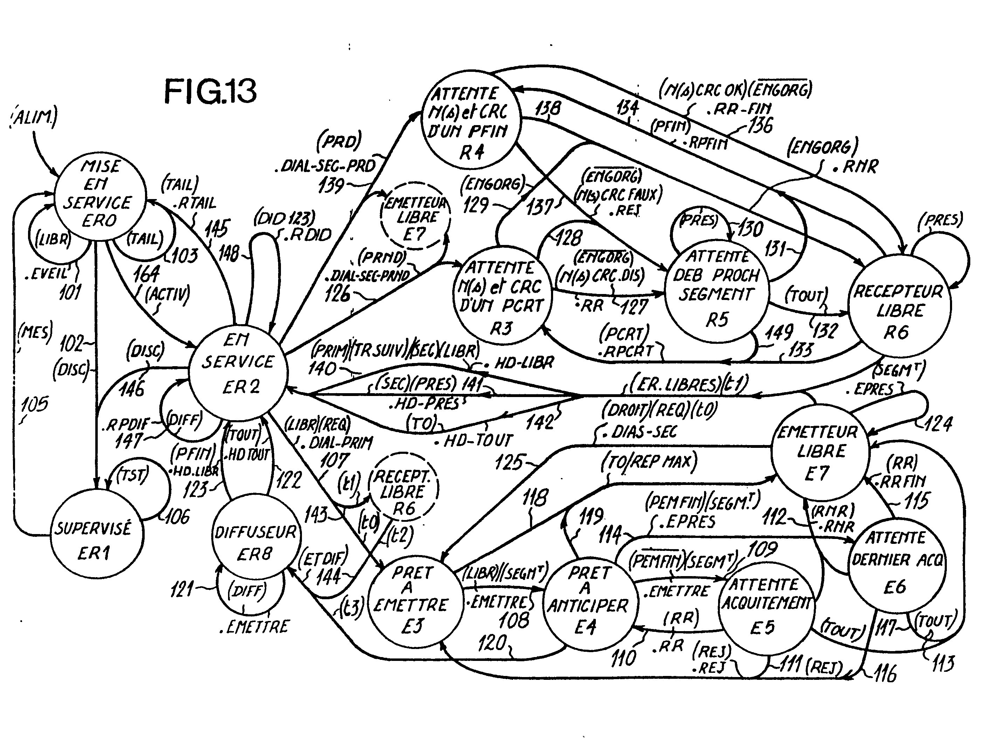

Le circuit 505 convertit les signaux iT'1, iT'2, iT'(n-1) et iT'n en quatre signaux t0, t1, t2 et t3. Le diagramme des temps de la Fig. 12 montre les signaux t0 à t3. Les fils de sortie t0 à t3 du circuit 505 sont reliés au canal d'entrée 1103, Fig. 11, du circuit des automates 414.

La Fig. 12 montre également un signal LD qui passe respectivement au niveau haut quand t0 et t3 passent au niveau bas, un signal AFFR qui passe au niveau haut avec t1 et t2, et un signal AFFE qui passe au niveau haut avec t0, t1 et t3. Sous forme logique, compte tenu que seules les transitions bas-haut comptent, on peut écrire

$$LD = t0 + t3$$

$$AFFR = t1 + t2$$

$$AFFE = t0 + t1 + t3$$

En pratique, les signaux LD, AFFR et AFFE sont engendrés dans un circuit de traduction 1102, Fig. 11, du circuit des automates 414, lequel sera décrit dans la suite.

L'opérateur CRC réception 404 est un circuit classique effectuant la division de la séquence de bits reçue de 401 par un polynôme afin de délivrer la séquence de contrôle qui, dans le message reçu, est nulle quand il n'y a pas d'erreur. La sortie du circuit 408 est validée pendant l'intervalle iT'n.

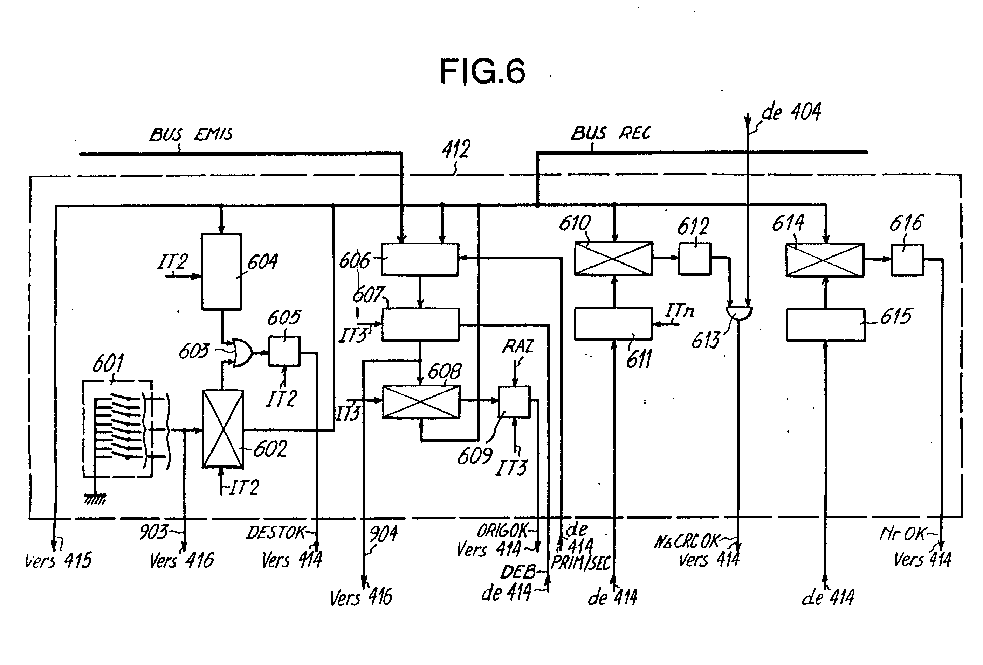

Le circuit de décodage 412, Fig. 6, comprend un codeur d'adresse locale 601 dont la sortie est reliée à une entrée d'un comparateur 602 dont l'autre entrée est reliée au bus de réception BUS REC et dont la sortie est reliée à une entrée d'une porte OU à deux entrées 603. La seconde entrée de la porte OU 603 est reliée à la sortie d'une mémoire de décodage d'adresse de diffusion 604 dont l'entrée est reliée au bus BUS REC. La sortie de la porte OU 603 est reliée à l'entrée d'une bascule de mémoire 605 dont la sortie est reliée à un fil DESTOK, lui-même relié à une entrée de l'automate de procédure 414. Les entrées de validation des circuits 602, 604 et 605 sont reliées à la sortie iT'2 de 503, Fig. 5.

Le circuit 412 comprend encore un multiplexeur 606 dont une entrée est reliée au bus de réception BUS REC et l'autre entrée au bus d'émission BUS EMIS et la sortie à l'entrée d'un registre 607. La sortie du registre 607 est reliée à une entrée d'un comparateur 608 dont l'autre entrée est reliée au bus BUS REC et dont la sortie est reliée à l'entrée d'une bascule de mémoire 609 dont la sortie est reliée au fil ORIGOK, lui-même relié à l'automate de procédure 414. L'entrée de commande du multiplexeur 606 est reliée à l'automate 414 par un fil PRIM/SEC qui, selon son état, commute l'information du bus BUS EMIS ou du bus BUS REC vers le registre 607 à travers le multiplexeur 606. Une entrée d'activation du registre 607 est reliée à la sortie iT'3 de 503 et une autre entrée d'activation est reliée à l'automate 414 par un fil PRIM/SEC, qui est activée au début d'un dialogue. Les entrées d'activation du comparateur 608 et de la bascule 609 sont reliées à la sortie iT'3.

Il comprend encore un comparateur 610 dont une entrée est reliée au bus BUS REC, l'autre entrée à la sortie d'un compteur de segment 611 et la sortie à l'entrée d'une bascule de mémoire 612. L'entrée d'initialisation à zéro du compteur 611 est reliée par un fil PRIM/SEC à l'automate 414. La sortie de la bascule 612 est reliee à une entrée d'une porte ET 613 à deux entrées dont l'autre entrée est reliée à la sortie de l'opérateur 404 et dont la sortie est reliée au fil NsCRCOK, lui-même relié à l'automate 414. L'entrée d'incrémentation du compteur 611 est reliée à la sortie iT'(n-1).-RR+RRFIN, comme l'entrée d'activation du comparateur 610 et de la bascule 612. A noter que la sortie de l'opérateur 404 est active à l'instant iT'n.

Enfin, le circuit 412 comprend un comparateur 614 dont une entrée est reliée au bus BUS REC, l'autre entrée à la sortie d'un compteur d'indice 615 et la sortie à l'entrée d'une bascule de mémoire 616 dont la sortie est reliée au fil NrOK, lui-même relié à l'automate 414. L'entrée d'initialisation du compteur 615 est relié par un fil PRIM/SEC à l'automate 414. Les entrées d'activation des circuits 614 à 616 sont reliées à la sortie iT'n, ainsi que l'entrée d'incrémentation du compteur 615.

Le codeur 601 est symbolisé par huit fils mis ou non à la masse par des contacts fermés ou ouverts. La combinaison de ces contacts définit l'identité locale de la station. La mémoire 604 peut être une mémoire PROM dont les fils d'entrée sont reliés au bus BUS REC et la sortie à 603. Les compteurs 611 et 615 sont mis à "00" au début de chaque dialogue par le fil PRIM/SEC. Le compteur 611, incrémenté à chaque segment recu, contient donc toujours l'indice du prochain segment attendu. Le compteur 615 est également incrémente à chaque réception d'acquittement RR ou RRFIN et contient donc l'indice de l'acquittement attendu.

Le fonctionnement du circuit de décodage 412 est le suivant. Quand, à la sortie du registre 410, c'est à dire sur le bus de réception BUS REC, est affiché l'octet iT2 contenant l'adresse de la station destinataire, le comparateur 602, activé par iT'2, délivre un signal de sortie qui est à "1" si cette identité correspond à l'information contenue dans le codeur 601 et un "0" dans le cas contraire. Ce signal de sortie est transmis par la porte OU 603 et emmagasiné dans la bascule 605. Ainsi l'information DESTOK est disponible sur le fil du même nom pour l'automate 414. Dans le cas où la sous-trame STP porte un message de diffusion, l'octet iT2 est reconnu dans le circuit 604 dont le signal de sortie passe par la seconde entrée de la porte OU 605 pour donner l'information DESTOK.

Le multiplexeur 606 permet si la station est primaire, dans le dialogue, d'introduire l'identité de la station secondaire du dialogue dans le registre 607, cette information étant transmise au début du dialogue par le circuit d'émission 415, au moyen du bus BUS EMIS. Par contre, dans un dialogue où la station est secondaire, le multiplexeur 606 permet de recevoir du bus BUS REC au cours du premier segment envoyé par la station primaire l'identité de celle-ci. Il apparaît donc qu'au premier segment, cette identité sera introduite dans 607 pour y être mémorisée pendant la durée du dialogue. Pendant les segments reçus dans la suite du dialogue, l'octet iT3 porte la même identité qui est directement appliquée à l'autre entrée du comparateur 608. Il apparaît donc bien que la bascule 609 délivre à chaque trame, après iT'3, l'information ORIGOK.

L'octet iT4 porte l'indice du segment reçu, lequel est comparé dans le comparateur 610 avec l'indice attendu contenu dans le compteur 611. La bascule 612 conserve le résultat de la comparaison. Quand la séquence de contrôle a été calculée dans l'opérateur 404, Fig. 4, c'est à dire à l'instant iT'n, le résultat est transmis à la porte ET 613 dont la sortie transmet bien à cet instant l'information NsCRCOK.

L'octet iTn porte, entre autres, l'indice de l'acquittement reçu, lequel est comparé dans le comparateur 614 avec l'indice attendu contenu dans le compteur 615. Donc, après iT'n, la bascule 616 délivre bien l'information NrOK.

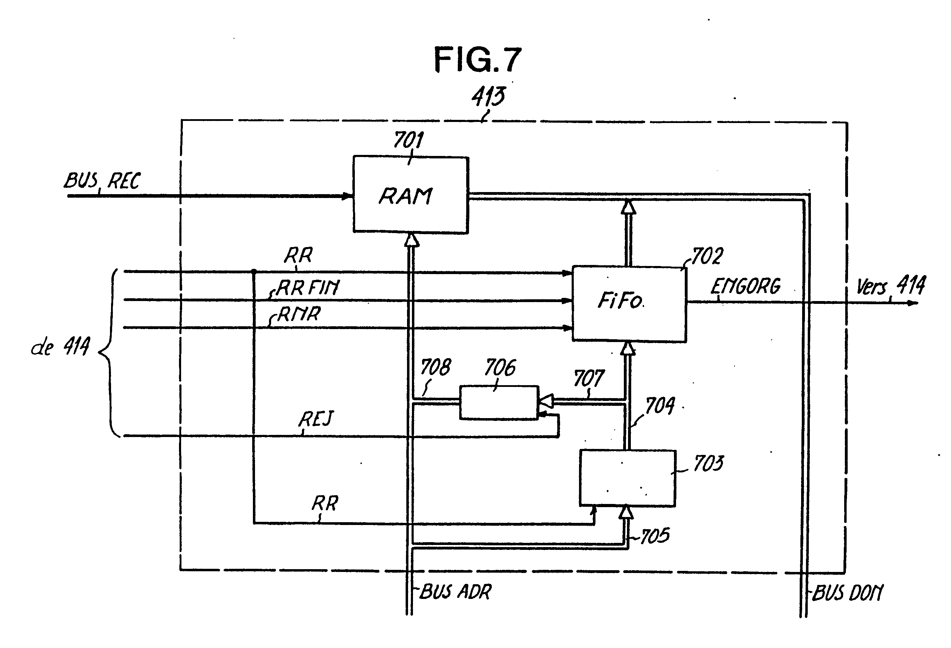

Le circuit de réception 413, Fig. 7, comprend une mémoire RAM 701 dont l'entrée de données est reliée au bus de réception BUS REC, dont la sortie de données est reliée au bus de données BUSDON, Fig. 4, et dont l'entrée d'adresses est reliée au bus d'adresses BUSADR. A la mémoire 701, est associée une mémoire FiFo 702 dont l'entrée de données est reliée à la sortie d'un registre d'adresse de début de segment 703 par une liaison 704 et dont la sortie est reliée au bus de données BUSDON. L'entrée de données du registre 703 est reliée au bus d'adresses BUSADR, par une liaison 705, et sa sortie est également reliée à l'entrée d'un compteur 706, par une dérivation 707 de la liaison 704. Le compteur 706 est incrémenté à la réception de chaque octet de chaque segment reçu et sert de pointeur pour la mémoire 701. La sortie du compteur 704 est reliée au bus d'adresse BUSADR, par une liaison 708.

La mémoire RAM 701 mémorise, octet par octet, les octets de chaque segment qui lui sont transmis par le BUS BUSREC. Le compteur 706 contient au début de chaque segment l'adresse à laquelle la mémoire RAM doit ranger le premier octet du prochain segment. Le registre 703 est relié à l'automate 414 par un fil SEC + RRrec qui lui indique au début de chaque segment et, après chaque segment bien reçu, qu'il doit, par 708 et 705, appeler le contenu du compteur 706. Le compteur 706 est également relié à l'automate 414 par un fil REJ.

La mémoire FiFo 702 sert à mémoriser les adresses de la mémoire RAM 701 auxquelles sont mémorisées les débuts de chaque segment qui sont écrits à la suite dans la mémoire FiFo 702. Chaque mot de la mémoire FiFo 702 comprend, en plus des bits de l'adresse du début de segment dans 701, deux bits de signalisation, qui servent à mémoriser la façon dont la transmission du paquet reçu se termine. A cet effet, la mémoire FiFo 702 comporte trois entrées reliées respectivement aux fils RRrec, RRFINrec et RNRrec reliés aux sorties correspondantes du circuit des, automates 414., Si le paquet se termine correctement, le premier bit de signalisation passe à "1" au moment de la réception de l'ordre RRFIN, alors que la réception de l'ordre RR le laissait inchangé. Par contre, si la transmission du paquet est interrompue avant son terme pour une raison quelconque, le fil RNR activé met à "1" le second bit de signalisation.

En pratique, la mémoire FiFo se compose de deux mémoires FiFo en série, chacune de ces mémoires ayant une capacité de seize mots. Classiquement, un des fils de connexion entre les deux mémoires est activé quand la seconde mémoire est pleine, c'est à dire que la première n'est plus vide. Ce fil est relié par un fil ENGORG à l'entrée correspondante du circuit 414.

Si, à la fin d'un segment, l'automate 414 constate que celui-ci est correct, il donne par le fil RRrec au niveau "1", l'ordre au registre 703 d'appeler, par 708, BUS ADR et 705, le contenu du compteur 706. Si, au contraire, l'automate 414 a constaté une erreur dans le segment reçu, le fil REJ, à "1", provoque l'appel dans le compteur 706 du contenu du registre 703. Autrement dit, dans ce cas les octets du prochain segment seront mémorisés dans la mémoire RAM 701 aux mêmes adresses que ceux du segment reçu erroné. Par ailleurs, à chaque segment correct reçu, le fil RRrec ou RRFIN est activé, ce qui provoque le transfert du contenu du registre 703 dans la mémoire FiFo 702, par 704. Ainsi, au fur et à mesure de l'arrivée des segments d'un paquet, les adresses de la mémoire 701 auxquelles sont mémorisés les débuts de chaque segment sont mémorisées à la suite dans la mémoire FiFo 702.

Le microprocesseur 417 peut prélever le contenu de la mémoire FiFo par l'intermédiaire du bus BUSDON, puis en fonction des adresses ainsi obtenues adresser par le bus BUSADR la mémoire RAM 701 et y prélever les octets utiles des paquets transmis. Les deux bits de signalisation de la mémoire FiFo 702 lui permettent d'interpréter les paquets reçus et de les délivrer, en fonction de leurs contenus, aux terminaux desservis par l'unité de contrôle de grappe UCG.

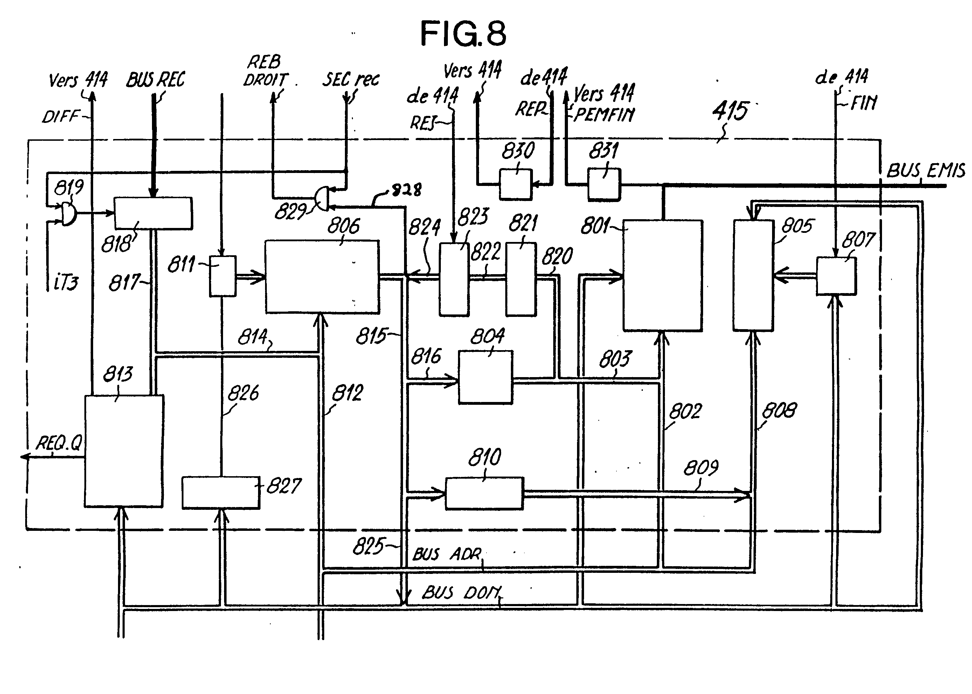

Le circuit d'émission 415, Fig. 8, comprend une mémoire RAM 801 dont l'entrée de données est reliée au bus BUSDON, dont la sortie de données est reliée au bus d'émission BUS EMIS et dont l'entrée d'adresses est reliée, d'une part, au bus BUSADR par une liaison 802 et, d'autre part, par une dérivation 803 de la liaison 802, à la sortie d'un compteur d'octets 804. La mémoire 801 est arrangée en seize zones capables chacune de mémoriser un paquet entier, eventuellement constitué de plusieurs segments, destiné à une autre station. Il ne peut y avoir simultanément dans la mémoire 801 deux paquets mémorisés en vue d'une transmission à une même autre station.

A la mémoire 801 est associée, d'une part, un registre d'état des zones 805 et, d'autre part, une mémoire

12

RAM 806 de pointeurs. L'entrée de données du registre 805 est reliée à la sortie d'un aiguilleur 807, son entrée d'adresses est reliée, d'une part, au bus d'adresses BUSADR par une liaison 808 et, d'autre part, par une dérivation 809 de la liaison 808 à un registre de début de zone 810 et sa sortie de données est reliée au bus de données BUSDON. La mémoire de pointeurs 806 a son entrée de données reliée à la sortie d'un aiguilleur 811, son entrée d'adresses reliée, d'une part, au bus BUSADR par une liaison 812 et, d'autre part, à la sortie d'une mémoire FiFo 813 par une dérivation 814 de la liaison 812, et sa sortie de données est reliée par une liaison 815 à l'entrée du registre 810. Une dérivation 816 de la liaison 815 est reliée à l'entrée du compteur 804.

L'entrée de données de la mémoire FiFo 813 est reliée au bus BUSDON. Elle comporte une sortie de commande qui est reliée par le fil REQ.Q au circuit des automates 414 et qui est activé dès que la mémoire FiFo 813 n'est pas vide. Une dérivation 817 de la dérivation 814 est reliée à la sortie d'un registre 818 dont l'entrée de données est reliée au bus de réception BUS REC et l'entrée d'activation à une porte ET 819 dont une entrée est reliée au fil SECrec et l'autre à la sortie iT3 de la base de temps 403, Figs. 4 et 5.

La dérivation 803 reliée à la sortie du compteur d'octets 804 comporte une dérivation 820 reliée à l'entrée d'un registre 821 dont la sortie est reliée par une liaison 822 à l'entrée d'un second registre 823. La sortie du registre 823 est reliée à la liaison 815 par une dérivation 824. La liaison 815 est encore reliée au bus BUSADR par une dérivation 825.

L'aiguilleur 807 a une entrée reliée au bus de données BUSDON et une entrée de commande de mise à zéro reliée par un fil FIN au circuit des automates 414. De même, l'aiguilleur 811 a une entrée reliée, par une liaison 826, à la sortie d'un registre 827 dont l'entrée de données est reliée au bus BUSDON, et une autre entrée de commande de mise à zéro par un fil FIN au circuit des automates 414.

Enfin, un fil 828 de la liaison 815 est relié à une entrée d'une porte ET 829 dont l'autre entrée est reliée au fil SECrec et la sortie à l'automate 414 par un fil REQ.DROIT.

Le circuit 415, Fig. 8, comporte encore un compteur 830 dont l'entrée de décrémentation est reliée au fil REP sortant du circuit des automates 414 et l'entrée de chargement au fil PRIM.SEC, et dont la sortie "0" est reliée par un fil REPMAX à une entrée correspondante du circuit 414. En pratique, le compteur est chargé, par le fil PRIM.SEC au moment de l'entrée en dialogue, à une nombre prédéterminé égal au nombre maximal de répétitions de segments accordé à l'unité UCG et ce nombre est décrémenté à chaque répétion. Quand le compteur est à "0", l'événement local REPMAX est émis.

Le circuit 415 comprend encore un décodeur de jeton 831 qui est relié au bus d'émission BUS EMIS et dont la sortie est reliée par le fil PEMFIN à l'entrée correspondante du circuit des automates 414. L'événement local PEMFIN est émis par le décodeur 830 quand le bus BUS EMIS transmet un jeton PRD ou PFIN.

Enfin, les mots écrits dans la mémoire FiFo 813 comprennent les bits d'adressage de la mémoire de pointeurs 806, plus un bit qui indique si le paquet écrit dans 801 pour émission est ou non à diffuser à toutes les autres stations de la boucle, selon qu'il est à "1" ou à "0". C,est pourquoi, à la dérivation 814 de sortie de la mémoire 813 est associé un fil DIF qui est relié à une entrée correspondante du circuit 414.

Pour émettre un paquet provenant d'un terminal desservi par l'UCG vers une station destinataire B, le microprocesseur 417 écrit, par BUSDON, l'adresse de B dans la mémoire FiFo 813. Par ailleurs, il adresse en écriture, par BUSADR, la mémoire RAM 806 avec l'adresse B et introduit dans le registre 827 l'adresse du début de la zone X de la mémoire 801 dans laquelle il a décidé de mémoriser le paquet à transmettre à la station B, cette adresse de début de zone étant écrite dans la mémoire pointeur 806 par l'intermédiaire de la liaiso, 826 et de l'aiguilleur 811.

A partir de ce moment, à chaque fois que la mémoire 806 est adressée en lecture par l'adresse B, elle délivre vers la liaison 815 l'adresse du début de la zone X, qui est communiquée, d'une part, au registre 810 et, d'autre part, au compteur 804. L'information de sortie du registre 810 adresse, en écriture, le registre d'état de zone 805. Par ailleurs, l'information de sortie du compteur 804 adresse en lecture la mémoire d'émission 801, cette même information étant transmise au registre 821 par la dérivation 820. Le compteur 804 est incrémenté pour chaque octet délivré par la mémoire. Donc la sortie de 804 constitue à chaque instant, pour 801, l'adresse du prochain octet à émettre. A la fin d'un segment émis, l'information à la sortie de 804 est X(n + 1). Le registre 821 contient encore Xn. Dès le début de l'émission du segment suivant, l'information Xn contenue dans 821 est transmise par 822 dans le registre 823 et l'information X(n + 2) présente à la sortie de 804 est transmise dans le registre 823 et l'information Xn est enregistrée dans le registre 821. Il apparaît donc que, si le premier segment emis n'a pas été acquitté correctement dans la station destinatrice B, le second segment lui est envoyé, mais à la suite de cette émission, le registre 823 est commandé par le fil REJ relié à l'automate, si bien que son contenu X est transmis au compteur 804, par 824, 815 et 816. Donc le compteur 804 revient en arrière de deux segments, si bien que le segment non acquitté est réémis, ainsi que les segments suivants.

En pratique, l'adressage en lecture de la mémoire 806 peut être déclenché des deux manières suivantes.

Premièrement, la station locale est primaire dans le dialogue qui s'engage. La lecture de la mémoire FiFo est commandée par le fil PRIMDEB. Donc, la première adresse disponible à la sortie de 813 est lue et l'émission du paquet mémorisé dans la zone dont la mémoire 806 donne l'adresse de début au compteur, à partir de l'information de la mémoire FiFo 813 commence à être lue.

Il résulte de ce qui précède que, quand la station est primaire, les paquets sont émis dans l'ordre où les adresses des stations destinataires correspondantes ont été écrites par le microprocesseur 417 dans la mémoire FiFo 813.

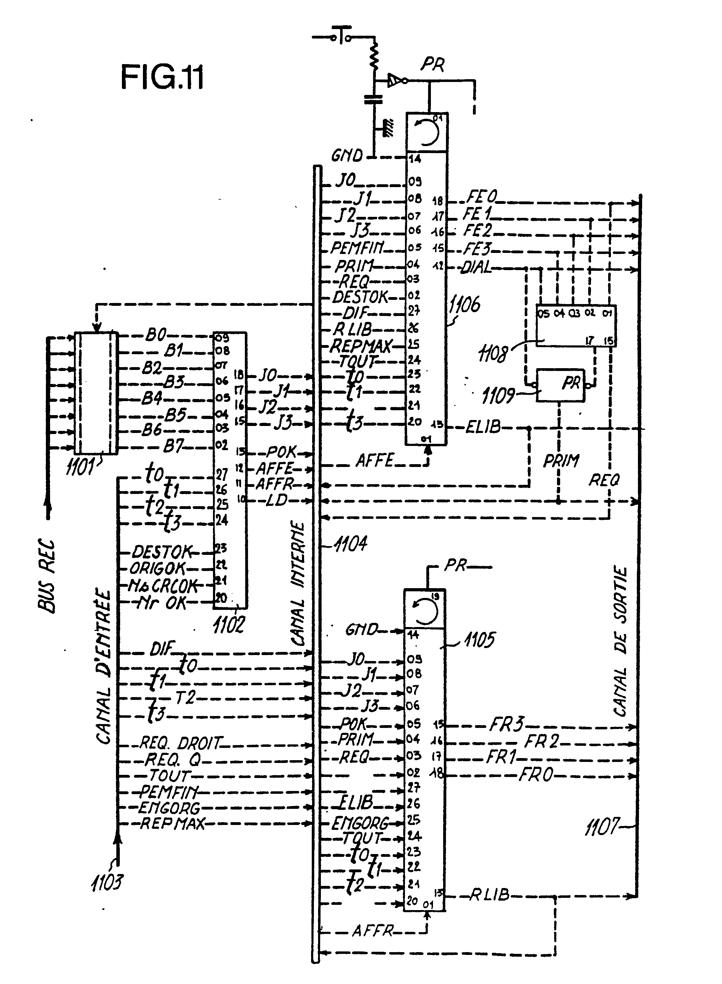

Le circuit générateur d'en-tête 416, Fig. 9 comprend un registre de jeton et d'acquittement 901 dont l'entrée est reliée par la liaison 902 à l'automate 414, un registre d'octet de source d'acquittement 903 dont l'entrée est reliée par une liaison 904 à la sortie du codeur d'adresse locale 601 du circuit 412, Fig. 6, et un registre d'adresse de station interlocutrice 905 dont l'entrée est reliée par une liaison 906 à la sortie du registre 607, Fig.6. Les sorties des registres 901, 903 et 905 sont reliées au bus émission BUS EMIS.

En ce qui concerne les moments d'activation des sorties des registres 901, 903 et 905, elles sont respectivement activées aux intervalles de temps iT''1, iT''2, iT''3 et iT''n de la sous-trame émise. Quand un jeton LIBR est émis, seule la sortie du registre 901 peut être activée à l'intervalle de temps iT''1. Quand un jeton PRES est émis, elles sont toutes activées. Quand un jeton PRD, PRND, PCRT ou PFIN est émis, elles ne sont pas activées aux temps iT''1, iT''2 et iT''3, car les données correspondantes ont été écrites dans la mémoire 801, Fig. 8, directement par le microprocesseur 417; par contre, la sortie de 905 peut être activée pour émettre un acquittement si l'UCG a reçu un segment.

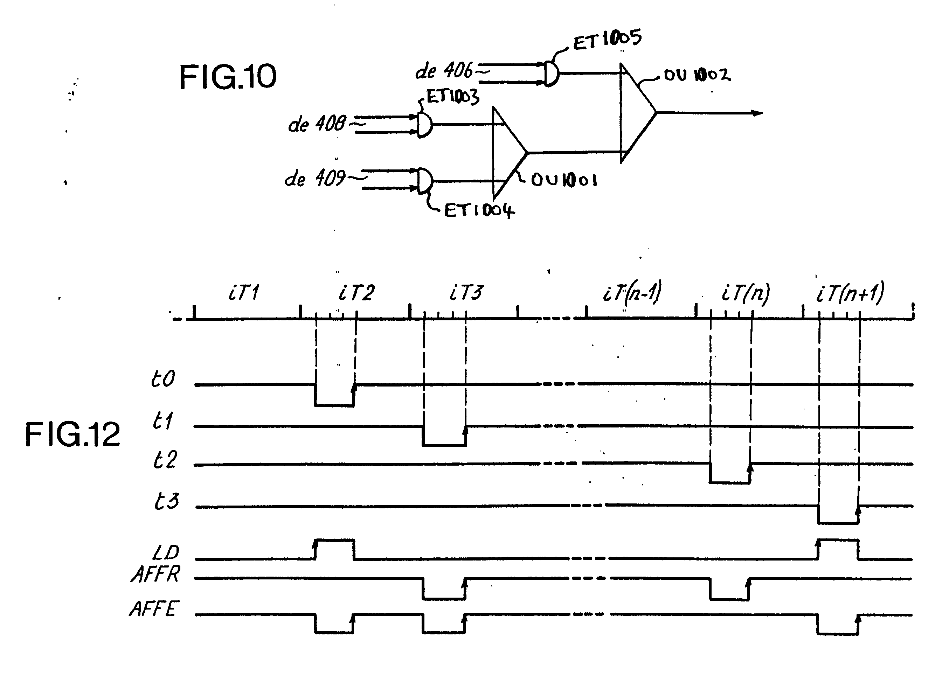

La Fig. 10 montre le circuit multiplexeur 411 qui comprend essentiellement deux portes OU 1001 et 1002. La première entrée de la porte OU 1001 est reliée à la sortie d'une porte ET 1003 dont une entrée est reliée à la sortie série du convertisseur 408 et dont l'autre entrée est activée aux intervalles de temps iT''1 à iT''(n-2) et iT''n de la trame d'émission. La seconde entrée de la porte OU est reliée à la sortie d'une porte ET 1004 dont une entrée est reliée à la sortie de l'opérateur CRC émission 409 et dont l'autre entrée est activée aux instant iT''(n-1) et iT''(n-2)

Une entrée de la porte OU 1001 est reliée à la sortie de la porte OU 1002 et l'autre à la sortie d'une porte 1005 dont une entrée est reliée à la sortie du circuit de traitement des données circuit 406 et l'autre entrée est activée pendant les instants iT''(n+1) à iT''127 de la trame sortante.

Le circuit des automates 414, Fig. 11, comprend un registre d'entrée 1101 dont les entrées parallèles sont reliées au bus réception BUS REC et dont les sorties sont reliées aux entrées B0 à B7 d'un circuit de traduction 1102. Le circuit de traduction 1102 a des entrées t0 à t3, DESTOK, ORIGOK, NsCRCOK et NrOK reliées aux fils correspondant d'un canal d'entrée 1103.

Le circuit de traduction 1102 a des sorties J0 à J3, POK, AFFE, AFFR et LD qui sont reliées à un canal interne 1104 Le canal interne 1104 a encore des entrées t0 à t3, REQ.DROIT, REQ.Q, TOUT, PEMFIN, ENGORG, REPMAX et DIF reliées aux fils correspondants du canal d'entrée 1103. En pratique, les canaux 1103 et 1104 représentent simplement des faisceaux de fils, comme également le canal de sortie 1107, (qui sera mentionné dans la suite.

Les fils de sortie du canal interne 1104 sont relié, d'une part, à un automate récepteur 1105 et, d'autre part, un automate émetteur 1106.

Les fils d'entrée de données de l'automate récepteur 1105 comprennent les fils t0, t1, t2, TOUT, ENGORG, ELIB, REQ, PRIM, POK et J0 à J3. Il comporte également une entrée d'horloge AFFR, déjà mentionné en relation avec la Fig. 12, et une entrée de masse GND. Ses sorties de données sont les fils FR0 à FR3 et RLIB reliés à un canal de sortie 1107. Le fil RLIB est également relié au canal interne 1104. Enfin, il dispose d'une entrée PR qui est une commande d'initialisation de l'automate.

Les fils d'entrée de données de l'automate émetteur 1106 comprennent les fils t0, t1, t3, TOUT, REPMAX, RLIB, DIF, DESTOK, REQ, PRIM, PEMFIN et J0 à J3. 11 comporte encore une entrée d'horloge AFFE, déjà mentionnée en relation avec la Fig. 12, et une entrée de masse GND. Ses sorties de données sont reliées aux fils FE0 à FE3, DIAL et ELIB, reliés au canal de sortie 1107. Le fil ELIB est encore relié au canal interne 1104. Les fils FE0 à FE3 et DIAL sont également reliés aux entrées d'un circuit traducteur 1108 dont une sortie est relié au canal 1104 par le fil REQ et une autre sortie à l'entrée PR d'une bascule 1109. L'autre entrée de la bascule 1109 est reliée au fil DIAL et sa sortie PRIM est reliée aux canaux 1104 et 1107. L'automate émetteur 1106 a encore une entrée d'initialisation PR.

Avant de décrire en détail le fonctionnement du circuit 414, Fig. 11, on va d'abord examiner les signaux qui lui sont transmis par les fils du bus réception BUS REC et du canal d'entrée 1105 et qui constituent ce que l'on appellera dans la suite les événements extérieurs et les événements locaux.

Les événements extérieurs sont, en pratique, les divers jetons mentionnés ci-dessus et les événements locaux sont les suivants:

- l'événement DESTOK qui correspond à la reconnaissance de son identité dans l'octet iT2 portant l'adresse du destinataire, DESTOK étant émis par la bascule 605, Fig. 6,

- l'événement ORIGOK qui correspond à la reconnaissance de l'adresse de la station interlocutrice dans l'octet iT3 portant l'adresse de la source, ORIGOK étant émis par la bascule 609, Fig. 6,

- l'événement NsCRCOK qui correspond à un numéro de segment et à une séquence de contrôle de trame trouvée correcte, NsCRCOK étant émis par le porte ET 613, Fig. 6,

- l'événement NrOK qui correspond à un numéro d'acquittement et un acquittement trouvé correct, NrOK étant émis par la bascule 616, Fig. 6,

- l'événement REQ.Q qui correspond à une requête d'émission à destination d'une station quelconque, REQ.Q étant émis par la mémoire FiFo 813, Fig.8,

- l'événement REQ.DROIT qui correspond à une requête d'émission en dialogue à la réception d'un paquet émis par une autre station, REQ.DROIT étant émis par la porte ET 829, Fig. 8,

- l'événement TOUT qui correspond au dépassement d'une temporisation qui signifie que le communicateur est le sujet d'un fonctionnement anormal, TOUT étant figuré ici comme un événement externe pour une meilleure compréhension de l'invention, mmais étant, en pratique, intégré dans le fonctionnement de l'automate,

- l'événement PEMFIN qui correspond au fait que le dernier segment d'un paquet a été envoyé, PEMFIN étant émis par le circuit décodeur 831, Fig. 8,

- l'événement ENGORG qui correspond au fait que la mémoire FiFo 702 du circuit de réception 413 est sur le point d'être engorgée, ENGORG étant émis par la mémoire FiFo 702, Fig. 7,

- l'événement REPMAX qui correspond au fait que le nombre maximal de répétitions d'un segment a été atteint, REPMAX étant émis par le compteur 830, Fig. 8,

- l'événement local SEGMT qui correspond, en pratique, à l'événement DESTOK au temps t1.

Il faut encore ajouter que ces événements sont pris en compte à des instants prédéterminés parmi les temps t0 à t3.

En ce qui concerne les fonctions, celles-ci sont rassemblées dans les tableaux I et II ci-après relatifs respectivement aux automates récepteur et émetteur.

Le circuit des automates de procédure 414 effectuent les fonctions présentées dans le graphe de la Fig. 13 Dans ce graphe, les états des automates considérés comme "stables" sont représentés par des cercles relies entre eux par des arcs qui symbolisent des transitions entre ces états stables. Les états notés R3 à R6 sont propres à l'algorithme de réception, les états notés E3 à E7 sont propres à l'algorithme d'émission et les états notés ER0, ER1, ER2 et ER8 sont communs à ces deux algorithmes.

En fait, les automates 1105 et 1106 non seulement délivrent divers signaux de sortie suivant les signaux d'entrée appliqués, mais encore changent leurs états suivant ces signaux d'entrée. De plus, les signaux de sortie des automates dépendent non seulement des signaux d'entrée, mais encore des états des automates au moment où ces signaux d'entrée leur sont appliqués. A la Fig. 11, le fait que les états des automates peuvent changer est illustré par les blocs "COND" dans lesquels sont dessinées des flèches arquées. Quand on initialise une unité, les deux entrées PR sont activées pour initialiser les états des automates.

Les événements incidents, qui sont significatifs pour l'un ou l'autre des algorithmes sont indiqués entre parenthèses au-dessus des arcs de transition tandis que les fonctions produites pendant la transition sont indiquées sous les arcs, et toujours précédées d'un point. Quand les transitions n'influent pas sur la stabilité de l'état en cours, elles sont représentées par des arcs ayant pour origine et pour arrivée le même état.

L'état ERO correspond à l'état "MISE EN SERVICE". Dès la mise Sous tension de la station, indiqué par l'événement (ALIM), le communicateur se place dans cet état ERO. Dés réception d'un jeton (LIBR), arc 101, il transmet à l'unité UCB une demande d'éveil indiquée par la fonction EVEIL. L'unité UCB peut vouloir tester le communicateur en lui envoyant un jeton (DISC), arc 102, ce qui le fait passer à l'état ER1, ou lui communiquer directement les paramètres de taille de segment par le jeton (TAIL), arc 103, ce qui déclenche la fonction RTAIL, mais ne lui fait pas changer d'état et ensuite lui envoyer le jeton (ACTIV), arc 104, qui le fait passer à l'état ER2.

**TABLEAU I**

**AUTOMATE RECEPTEUR**

| AFF | FONCTION | SIGNIFICATION | CODE |
|-----|----------|---------------|------|
| T1 | RTAIL | CHANGEZ DE TAILLE SEGMT. | 0101 |
| T1 | EVEIL | ENVOYEZ UN JETON EVEIL | 0110 |
| T1 | RTST | DECLANCHEZ PROCEDURE TEST | 0111 |
| T1 | RDID | DIFFUSION DIDON | 1000 |
| T1 | DIAL-SEC-PRND | RECEPT. 1ER SEG. DU DIALOGUE | 1001 |
| T1 | DIAL-SEC-PRD | RECEPT. 1ER ET DERNIER SEGMT. | 1010 |
| T1 | RPCRT | RECEPT. SEGMENT COURANT | 1011 |
| T1 | RPFIN | RECEPT. DERNIER SEGMENT | 1100 |
| T1 | RPDIF | DIFFUSION CARTHAGE | 1101 |
| T2 | RR | REPONDEZ RR | 0001 |
| T2 | RRFIN | REPONDEZ RR FINAL | 0010 |
| T2 | REJ | REPONDEZ REJ | 0011 |
| T2 | RNR | REPONDEZ RNR | 0100 |

**TABLEAU II**

**AUTOMATE EMETTEUR**

| AFF | FONCTION | SIGNIFICATION | CODE |
|-----|----------|---------------|------|
| TO | DIAL–PRIM | EMETTEZ LE PREMIER SEGMENT | 0101 |
| T1 | EPRES | RESERVEZ LE SEGMENT | 0111 |
| T1 | EMETTRE | EMETTEZ OU REPETTEZ SEGMENT | 1000 |
| T1 | HD–LIBR | EMETTEZ LIBR (FIN DIALOGUE) | 1001 |
| T1 | HD–PRES | EMETTEZ PRES (FIN DIALOGUE) | 1010 |
| T1 | HD–TOUT | FIN DIALOGUE CAUSE TOUT | 1011 |
| T3 | RR | RECEPT. RR COURANT | 0001 |
| T3 | RRFIN | RECEPT.DERNIER RR ATTENDU | 0010 |
| T3 | REJ | PREPAREZ VOUS A REPETTER | 0011 |
| T3 | RNR | CORRESPONDANT ENGORGE | 0100 |

L'état ER1 correspond à l'état SUPERVISE qui résulte toujours de la réception du jeton (DISC). Dans cet état, la réception du jeton (MES), arc 105, le refait passer à l'état ER0 ou la réception du jeton (TST), arc 106, le fait déclencher un programme de test interne, sans changer d'état.

L'état ER2 correspond à l'état EN SERVICE, qui seul permet à une station d'entrer en dialogue sur la boucle. Dans et entre les états ER0 à ER2, les deux automates d'émission et de réception évoluent ensemble. Dans les états ER0 à ER2, le communicateur est en phase hors dialogue.

Si le communicateur a un message à émettre, ce qui se traduit par l'événement interne (REQ), signifiant "requête émission", et s'il reçoit un jeton (LIBR), arc 107, il en résulte la fonction DIALPRIM, signifiant dialogue avec statut primaire, et le passe de l'état ER2 à l'état E3 correspondant à l'état PRET A EMETTRE.

A l'état E3, l'événement extérieur (LIBR) ou l'événement local (SEGMT) engendre la fonction .EMETTRE, arc 108, et fait passer l'automate émission de l'état E3 à l'état E4 correspondant à l'état PRET A ANTICIPER.

A l'état E4, si le segment à émettre est marqué par un jeton PRND ou PCRT, c'est à dire que l'événement local n'est pas PEMFIN, l'événement SEGMT, arc 109, entraîne la fonction .EMETTRE et le passage à l'état E5 qui correspond à l'état ATTENTE ACQUITTEMENT. Dans cet état E5, si l'événement extérieur (RR) survient, arc 110, il en résulte la fonction .RR et le changement d'état vers E4, ce qui indique le segment précédent a été bien reçu par la station destinatrice et que le segment suivant peut être envoyé; si l'événement (REJ) survient, ce qui signifie que la station destinatrice a trouvé le segment précédent incorrect, il en résulte la fonction .REJ, arc 111, et le retour à l'état E3; et si l'événement (RNR) survient, ce qui signifie un engorgement à la station réceptrice, il en résulte la fonction .RNR, arc 112, et le passage à l'état E7 correspondant à l'état EMETTEUR LIBRE. Enfin, si l'événement (TOUT) survient, ce qui signifie un défaut dans l'émetteur, arc 113, il y a passage à l'état E7.

A l'état E4, si le segment à émettre est marqué par un jeton PRD ou PFIN, c'est à dire que l'événement local est PEMFIN, l'événement SEGMT, arc 114, entraîne la fonction .EPRES et le passage à l'état E6 qui correspond à l'état ATTENTE DERNIER ACQUITTEMENT. Dans cet état E6, si l'événement extérieur (RR) survient, il entraîne la fonction .RRFIN, arc 115, et le passage à l'état E7; si l'événement (REJ) survient, il entraîne l'état. REJ, arc 116, et le retour à l'état E3. Enfin, l'événement (TOUT), arc 117, entraîne le passage à l'état E7.

Dans les états E3 et E4, l'événement (TOUT) ou l'événement REPMAX entraînent, arc 118 et 119; le passage à l'état E7.

A l'état E4, au temps t3, si l'événement ETDIF, arc 120, Survient, il y a passage à l'état E8 correspondant à l'état DIFFU-SEUR, c'est à dire celui où la station diffuse un message aux autres stations en le marquant du jeton DIFF. A l'état ER8, la génération de l'événement (DIFF), arc 121, entraîne la fonction .EMETTRE, sans changement d'état. Il n'y a bien sûr dans ce cas aucun acquittement à attendre. Le communicateur quitte l'état ER8 pour l'état ER2, soit à l'émission du jeton (PFIN), arc 122, en accomplissant la fonction .HD-LIBR, soit à l'événement (TOUT), arc 123, en accomplissant la fonction .HD-TOUT.

A l'état E7, si l'événement (SEGMT), arc 124, survient, il entraîne la fonction .EPRES et il n'y a pas de changement d'état. Egalement à l'état E7, si, au temps t0, l'événement (REQ.DROIT), arc 125, survient, il entraîne la fonction .PRET A EMETTRE en mode DUPLEX et le passage à l'état E3 de l'automate émetteur.

A l'état ER2, si le communicateur reçoit un jeton (PRND), arc 126, il entraîne la fonction .DIAL-SEC-PRND, signifiant la réception du premier segment d'un dialogue, et l'automate récepteur passe à l'état R3 qui correspond à l'état ATTENTE N(s) ET CRC D'UN PCRT.

A l'état R3, si les événements N(s)OK et CRCOK surviennent, alors qu'il n'y a pas l'événement ENGORG, il en résulte la fonction .RR, arc 127, et le passage à l'état R5 qui correspond à l'état ATTENTE DEBUT PROCHAIN SEGMENT. Par contre, si l'un des événements (N(s)FAUX) ou (CRCFAUX) survient, sans l'événement ENGORG, il en résulte la fonction .REJ, arc 128, et également le passage à l'état R5. Enfin, si l'événement (ENGORG), arc

16

129, survient, il en résulte la fonction .RNR et le passage à l'état R6 qui correspond à l'état RECEPTEUR LIBRE.

A l'état R5, si l'événement (PRES), arc 130, survient, il n'en résulte aucune action, ni transition et l'état de l'automate récepteur ne change pas. Si l'événement (PFIN), arc 131, survient, il entraîne la fonction RPFIN et le passage à l'état R4 qui correspond à l'état ATTENTE N(s) ET CRC D'UN PFIN. Enfin, l'événement (TOUT), arc 132, entraîne le passage à l'état R6.

A l'état R6, si l'événement (PRCT), arc 133, survient, il entraîne la fonction .RPCRT et le passage à l'état R3 Si l'événement (PFIN), arc 134, survient, il entraîne la fonction .RPFIN et le passage à l'état R4. Par ailleurs, si l'événement (PRES), arc 135 survient, il n'entraîne aucune action, ni transition et l'état de l'automate récepteur ne change pas.

A l'état R4, si les événements (N(s)OK et CRCOK surviennent, alors qu'il n'y a pas l'événement ENGORG, il en résulte la fonction .RR-FIN, arc 136, et le passage à l'état R6. Par contre, si l'un des événements (N(s)FAUX) ou (CRCFAUX) survient, sans l'événement ENGORG, il en résulte la fonction .REJ, arc 137, et le passage à l'état R5. Enfin, si l'événement (ENGORG), arc 138, survient, il entraîne la fonction .RNR et le passage à l'état R6.

A l'état ER2, si le communicateur reçoit un jeton (PRD), arc 139, il en résulte la fonction .DIAL-SEC-PRD, signifiant la réception d'un paquet composé d'un seul segment, et l'automate récepteur passe à l'état R4.

Quand les automates émetteur et récepteur sont respectivement dans les états E7 et R6, au temps T1, ils passent tous deux à l'état ER2 soit en réponse à l'événement (PRIM).(TRSUIV) ou à l'événement (SEC)(LIBR), arc 140, avec exécution de la fonction .HD-LIBR, soit en réponse à l'événement (SEC)(PRES), arc 141, avec exécution de la fonction .HD-PRES, soit en réponse à l'événement (TOUT), arc 142, avec exécution de la fonction .HD-TOUT.

Il faut ajouter que l'arc 107 est doublé par l'arc 143 qui correspond au même événement, mais au temps t1 et qui mène à l'état R6, lequel est représenté une seconde fois en traits tirets pour éviter, sur le dessin, des intersections entre des arcs. De même, les arcs 126 et 139 sont prolongés vers l'état E7, représenté pour la même raison une seconde fois en traits tirets. A l'état R6, l'événement (ETDIF), au temps t2, entraîne, arc 144, le passage à l'état E8 correspondant à l'état diffuseur.

Le registre d'entrée 1101 est un registre "S 374" dont l'entrée d'horloge LD est reliée par le fil LD au canal interne 1104. Cette entrée LD est activée sur les transitions montantes du signal LD de la Fig. 12, c'est à dire pour saisir, au temps t0, le jeton présent sur le bus BUS REC et, au temps t3, l'acquittement présent sur le même bus BUS REC.

Le circuit de traduction 1102 est un circuit du type PAL "82 S 107" qui combine les signaux appliqués à ces entrées pour en déduire des signaux suivant les correspondances indiquées dans le tableau III compte-tenu des codes des jetons et des acquittements définis dans le tableau IV. On notera que l'interprétation peut être effectuée par le circuit 1102 sur un code de jeton ou son complément. A noter que les références numériques portées sur les fils d'entrée et de sortie du circuit 1102 correspondent aux numéros d'ordre des bornes du circuit physique, tels qu'ils sont indiqués dans les notices d'utilisation du constructeur. Les tableaux Va et Vb indiquent les équations booléennes utilisés dans le circuit 1102.

L'automate émetteur 1105 est un circuit du type PAL "82 S 105". Les références numériques portées sur ses fils d'entrée et de sortie correspondent également aux numéros d'ordre des bornes indiqués par le constructeur. Le tableau VI donne les correspondances entre les données d'entrée et de sortie du circuit 1105 Les tableaux VIIa et VIIb indiquent les équations booléenes utilisées dans le circuit 1105.

L'automate récepteur 1106 est également un circuit du type PAL "82 S 105" et les références numériques correspondent aux numéros d'ordre de ses bornes. Le tableau VIII donne les correspondances entre ses données d'entrée et de sortie. Les tableaux IXa et IXb indiquent les équations booléennes utilisées dans le circuit 1106.

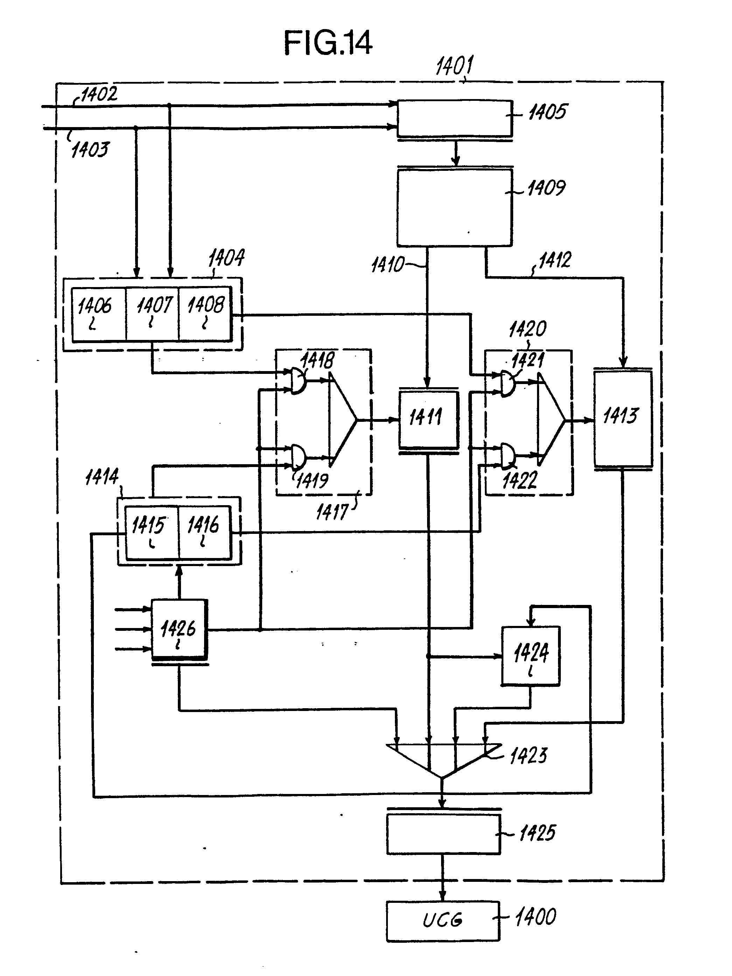

L'unité de contrôle de boucle UCB du coupleur 1.1 de la Fig. 1 est montrée à la Fig. 14. Elle comprend pratiquement une unité de contrôle de grappe UCG 1400, en amont de laquelle est monté, sur la boucle temporelle, un boucleur 1401. Le boucleur a pour objet la supervision des unités UCG et l'allocation dynamique de la ressource de transmission, ainsi que la resynchronisation des données au moment du rebouclage. En partique, comme dans de nombreux systèmes, l'unité de contrôle de boucle UCB est dupliquée, comme peut éventuellement l'être la boucle.

# 0 104 991

**TABLEAU III**

| EVNMT | EXT | TEMPS | JETON | SORTIES | FONCTIONS |
|---|---|---|---|---|---|
| SP00 | . . . . | 1 1 . . | 1 0 0 0  0 0 0 0 | . . . . | 0 0 0 1 .LIBR |
| SP01 | . . . . | 1 1 . . | 0 1 1 1  1 1 1 1 | . . . . | 0 0 0 1 .LIBR |
| SP02 | . . . 1 | 1 1 . . | 0 1 0 0  1 0 1 1 | . . . . | 0 0 1 0 .DISC |
| SP03 | . . . 1 | 1 1 . . | 1 0 1 1  0 1 0 0 | . . . . | 0 0 1 0 .DISC |
| SP04 | . . . . | 1 1 . . | 0 1 1 0  0 1 1 0 | . . . . | 0 0 1 1 .DIFF |
| SP05 | . . . . | 1 1 . . | 1 0 0 1  1 0 0 1 | . . . . | 0 0 1 1 .DIFF |
| SP06 | . . . 1 | 1 1 . . | 1 1 0 1  1 0 1 1 | . . . . | 0 1 0 0 .MES |
| SP07 | . . . 1 | 1 1 . . | 0 0 1 0  0 1 0 0 | . . . . | 0 1 0 0 .MES |
| SP08 | . . . 1 | 1 1 . . | 1 1 1 0  0 0 0 0 | . . . . | 0 1 0 1 .TST |
| SP09 | . . . 1 | 1 1 . . | 0 0 0 1  1 1 1 1 | . . . . | 0 1 0 1 .TST |
| SP10 | . . . 1 | 1 1 . . | 0 0 1 1  1 1 0 0 | . . . . | 0 1 1 0 .ACT |
| SP11 | . . . 1 | 1 1 . . | 1 1 0 0  0 0 1 1 | . . . . | 0 1 1 0 .ACT |
| SP12 | . . . 1 | 1 1 . . | 1 0 1 1  0 1 1 1 | . . . . | 0 1 1 1 .TAIL |
| SP13 | . . . 1 | 1 1 . . | 0 1 0 0  1 0 0 0 | . . . . | 0 1 1 1 .TAIL |
| SP14 | . . . 1 | 1 1 . . | 0 1 1 0  1 1 1 1 | . . . . | 0 1 1 1 .TAIL |
| SP15 | . . . 1 | 1 1 . . | 1 0 0 1  0 0 0 0 | . . . . | 0 1 1 1 .TAIL |
| SP16 | . . . 1 | 1 1 . . | 0 0 1 0  0 1 1 1 | . . . . | 0 1 1 1 .TAIL |
| SP17 | . . . 1 | 1 1 . . | 1 1 0 1  1 0 0 0 | . . . . | 0 1 1 1 .TAIL |
| SP18 | . . . 1 | 1 1 . . | 0 1 0 1  0 1 0 1 | . . . . | 1 0 0 0 .PCRT |
| SP19 | . . . 1 | 1 1 . . | 1 0 1 0  1 0 1 0 | . . . . | 1 0 0 0 .PCRT |
| SP20 | . . . 1 | 1 1 . . | 1 1 0 1  1 1 0 1 | . . . . | 1 0 0 1 .PFIN |
| SP21 | . . . 1 | 1 1 . . | 0 0 1 0  0 0 1 0 | . . . . | 1 0 0 1 .PFIN |
| SP22 | . . . 1 | 1 1 . . | 0 0 0 0  1 0 1 0 | . . . . | 1 0 1 0 .PRES |
| SP23 | . . . 1 | 1 1 . . | 1 1 1 1  0 1 0 1 | . . . . | 1 0 1 0 .PRES |
| SP24 | . . . . | 1 1 . . | 0 0 0 1  1 0 0 0 | . . . . | 1 0 1 1 .DID |
| SP25 | . . . . | 1 1 . . | 1 1 1 0  0 1 1 1 | . . . . | 1 0 1 1 .DID |
| SP26 | . . . . | 1 1 . . | 0 1 1 1  1 0 1 1 | . . . . | 1 0 1 1 .DID |
| SP27 | . . . . | 1 1 . . | 1 0 0 0  0 1 0 0 | . . . . | 1 0 1 1 .DID |
| SP28 | . . . . | 1 1 . . | 1 1 0 1  0 0 1 0 | . . . . | 1 0 1 1 .DID |
| SP29 | . . . . | 1 1 . . | 0 0 1 0  1 1 0 1 | . . . . | 1 0 1 1 .DID |
| SP30 | . . . 1 | 1 1 . . | 1 0 0 0  0 0 0 1 | . . . . | 1 1 0 0 .PRD |
| SP31 | . . . 1 | 1 1 . . | 0 1 1 1  1 1 1 0 | . . . . | 1 1 0 0 .PRD |
| SP32 | . . . 1 | 1 1 . . | 0 0 0 0  1 1 1 1 | . . . . | 1 1 0 1 .PRND |
| SP33 | . . . 1 | 1 1 . . | 1 1 1 1  0 0 0 0 | . . . . | 1 1 0 1 .PRND |
| SP34 | 1 . 1 1 | 0 . . . | . . . .  0 0 0 1 | . . . . | 0 0 0 1 .RR |
| SP35 | . . 1 1 | 0 . . . | . . . .  0 1 0 1 | . . . . | 0 0 1 0 .REJ |
| SP36 | . . 1 1 | 0 . . . | . . . .  1 0 0 1 | . . . . | 0 0 1 1 .RNR |
| SP37 | . 1 1 1 | . 0 . . | . . . .  . . . . | . . . 1 | . . . . .LD |
| SP38 | . . . . | 1 . 1 1 | . . . .  . . . . | . . 1 . | . . . . .AFFE |
| SP39 | . . . . | . 1 1 . | . . . .  . . . . | . . 1 . | . . . . .AFFR |
| SP40 | . . . . | . . . 0 | . . . .  . . . . | 1 . . . | . . . . .POK |
| SP41 | . . . . | 0 . . . | . . . .  . . . . | 1 . . . | . . . . .POK |

**TABLEAU IV**

| IDENTIF. | CONFIG. | COMPL. |
|----------|---------|--------|
| LIBR | 0111 1111 | 1000 0000 |
| DISC | 1011 0100 | 0100 1011 |
| DIFF | 1001 1001 | 0110 0110 |
| EVEIL | 0011 0100 | 1100 0000 |
| M.E.S. | 0010 0100 | 1101 1011 |
| TST | 0001 1111 | 1110 0000 |
| ACTIV | 1100 0011 | 0011 1100 |
| TAIL 32 | 0100 1000 | 1011 0111 |
| TAIL 64 | 1001 0000 | 0110 1111 |
| TAIL 96 | 1101 1000 | 0010 0111 |
| PCRT | 1010 1010 | 1101 1101 |
| PFIN | 0010 0010 | 1101 1101 |
| PRES | 1111 0101 | 0000 1010 |
| DID 1 | 1110 0111 | 0001 1000 |
| DID 2 | 1000 0100 | 0111 1011 |
| DID 3 | 0010 1101 | 1101 0010 |
| PRD | 0111 1110 | 1000 0001 |
| PRND | 1111 0000 | 0000 1111 |
| RR | .... 0001 | .... .... |
| REJ | .... 0101 | .... .... |
| RNR | .... 1001 | .... .... |

**Tableau Va**

**Equations booléennes du circuit 1102**
**Fonction "PRODUITS"**

$$SP00 = T3 * T2 * B7 * /B6 * /B5 * /B4 * /B3 * /B2 * /B1 * /B0$$
$$SP01 = T3 * T2 * /B7 * B6 * B5 * B4 * B3 * B2 * B1 * B0$$
$$SP02 = T3 * T2 * DESTOK * T3 * T2 * /B7 * B6 * /B5 * /B4 * B3 * /B2 * B1 * B0$$
$$SP03 = DESTOK * T3 * T2 * B7 * /B6 * B5 * B4 * /B3 * B2 * /B1 * /B0$$
$$SP04 = T3 * T2 * /B7 * B6 * B5 * /B4 * /B3 * B2 * B1 * /B0$$
$$SP05 = T3 * T2 * B7 * /B6 * /B5 * B4 * B3 * /B2 * /B1 * B0$$
$$SP06 = DESTOK * T3 * T2 * B7 * B6 * /B5 * B4 * B3 * /B2 * B1 * B0$$
$$SP07 = DESTOK * T3 * T2 * /B7 * /B6 * B5 * /B4 * /B3 * B2 * /B1 * /B0$$
$$SP08 = DESTOK * T3 * T2 * B7 * B6 * B5 * /B4 * /B3 * /B2 * /B1 * /B0$$
$$SP09 = DESTOK * T3 * T2 * /B7 * /B6 * /B5 * B4 * B3 * B2 * B1 * B0$$
$$SP10 = DESTOK * T3 * T2 * /B7 * /B6 * B5 * B4 * B3 * B2 * /B1 * /B0$$
$$SP11 = DESTOK * T3 * T2 * B7 * B6 * /B5 * /B4 * /B3 * /B2 * B1 * B0$$
$$SP12 = DESTOK * T3 * T2 * B7 * /B6 * B5 * B4 * /B3 * B2 * B1 * B0$$
$$SP13 = DESTOK * T3 * T2 * /B7 * B6 * /B5 * /B4 * B3 * /B2 * /B1 * /B0$$
$$SP14 = DESTOK * T3 * T2 * /B7 * B6 * B5 * /B4 * B3 * B2 * B1 * B0$$
$$SP15 = DESTOK * T3 * T2 * B7 * /B6 * /B5 * B4 * /B3 * /B2 * /B1 * /B0$$
$$SP16 = DESTOK * T3 * T2 * /B7 * /B6 * B5 * /B4 * /B3 * B2 * B1 * B0$$
$$SP17 = DESTOK * T3 * T2 * B7 * B6 * /B5 * B4 * B3 * /B2 * /B1 * /B0$$
$$SP18 = DESTOK * T3 * T2 * /B7 * B6 * /B5 * B4 * /B3 * B2 * /B1 * B0$$
$$SP19 = DESTOK * T3 * T2 * B7 * /B6 * B5 * /B4 * B3 * /B2 * B1 * /B0$$
$$SP20 = DESTOK * T3 * T2 * B7 * B6 * /B5 * B4 * B3 * B2 * /B1 * B0$$
$$SP21 = DESTOK * T3 * T2 * /B7 * /B6 * B5 * /B4 * /B3 * /B2 * B1 * /B0$$
$$SP22 = DESTOK * T3 * T2 * /B7 * /B6 * /B5 * /B4 * B3 * /B2 * /B1 * /B0$$
$$SP23 = DESTOK * T3 * T2 * B7 * B6 * B5 * B4 * /B3 * B2 * /B1 * B0$$

**Tableau Va**

**Equations booléennes du circuit 1102**
**Fonction "PRODUITS"**

```
SP24 = T3 * T2 * /B7 * /B6 * /B5 * B4 * B3 * /B2 * /B1 * /B0
SP25 = T3 * T2 * B7 * B6 * B5 * /B4 * /B3 * B2 * B1 * B0
SP26 = T3 * T2 * /B7 * B6 * B5 * B4 * B3 * /B2 * B1 * B0
SP27 = T3 * T2 * B7 * /B6 * /B5 * /B4 * /B3 * B2 * /B1 * /B0
SP28 = T3 * T2 * B7 * B6 * /B5 * B4 * /B3 * /B2 * B1 * /B0
SP29 = T3 * T2 * /B7 * /B6 * B5 * /B4 * B3 * B2 * /B1 * B0
SP30 = DESTOK * T3 * T2 * B7 * /B6 * /B5 * /B4 * /B3 * /B2 * /B1 *
       B0
SP31 = DESTOK * T3 * T2 * /B7 * B6 * B5 * B4 * B3 * B2 * B1 * /B0
SP32 = DESTOK * T3 * T2 * /B7 * /B6 * /B5 * /B4 * B3 * B2 * B1 * B0
SP33 = DESTOK * T3 * T2 * B7 * B6 * B5 * B4 * /B3 * /B2 * /B1 * /B0
SP34 = NROK * ORIGOK * DESTOK * /T3 * /B3 * /B2 * /B1 * B0
SP35 = ORIGOK * DESTOK * /T0 * /B3 * B2 * /B1 * B0
SP36 = ORIGOK * DESTOK * /T0 * B3 * /B2 * /B1 * B0
SP37 = NSCRCOK * ORIGOK * DESTOK * /T2
SP38 = T3 * T1 * T0
SP39 = T2 * T1
SP40 = /T0
SP41 = /T3
```

**Tableau Vb**

**Equations boolénnes du circuit 1102**
**Fonctions "Sommes"**

```
FOS =SP00+SP01+SP04+SP05+SP08+SP09+SP12+SP13+SP14+SP15+SP16+SP17+SP20
    +SP21+SP24+SP25+SP26+SP27+SP28+SP29+SP32+SP33+SP34+SP36

F1S =SP02+SP03+SP04+SP05+SP10+SP11+SP12+SP13+SP14+SP15++SP16+SP17+SP22
    +SP23+SP24+SP25+SP26+SP27+SP28+SP29+SP35+SP36

F2S =SP06+SP07+SP08+SP09+SP10+SP11+SP12+SP13+SP14+SP15+SP16+SP17+SP30
    +SP31+SP32+SP33

F3S =SP18+SP19+SP20+SP21+SP22+SP23+SP24+SP25+SP26+SP27+SP28+SP29+SP30
    +SP31+SP32+SP33

F4S =SP37

F5S =SP38

F6S =SP39

F7S =SP40+SP41
```

**Tableau VI**

| | EVENEMENT | | ETAT ACTUEL | ETAT SUIV. | AFFICHAGE | FONCTION |
|---|---|---|---|---|---|---|
| IDENTIFICATION | ENTREES | | | | | |
| EP00 104 ACTIV | . . 0 . . . . . . . . . . . | 0 1 1 0 | ER0 1 1 1 1 | ER2 0 0 1 0 | 0 1 | 0 0 0 0 | |
| EP01 102 DISC | . . 0 . . . . . . . . . . . | 0 0 1 0 | ER0 1 1 1 1 | ER1 0 0 0 1 | 0 1 | 0 0 0 0 | |
| EP02 105 MES | . . 0 . . . . . . . . . . | 0 1 0 0 | ER1 0 0 0 1 | ER0 1 1 1 1 | 0 1 | 0 0 0 0 | |
| EP03 126 PRND | . . 0 . . . . . . . . . | 1 1 0 1 | ER2 0 0 1 0 | E7 0 1 1 1 | 1 1 | 0 0 0 0 | |
| EP04 139 PRD | . . 0 . . . . . . . . . | 1 1 0 0 | ER2 0 0 1 0 | E7 0 1 1 1 | 1 1 | 0 0 0 0 | |
| EP05 107 LIBR . REQ | . . . 0 . . : . . . 1 . . | 0 0 0 1 | ER2 0 0 1 0 | E3 0 0 1 1 | 1 0 | 0 1 0 1 | .DIAL-PRIM |
| EP06 145 TAIL | . . 0 . . . . . . . . . . | 0 1 1 1 | ER2 0 0 1 0 | ER0 1 1 1 1 | 0 1 | 0 0 0 0 | |
| EP07 146 DISC | . . 0 . . . . . . . . . . | 0 0 1 0 | ER2 0 0 1 0 | ER1 0 0 0 1 | 0 1 | 0 0 0 0 | |
| EP08 108 LIBR | . . 0 . . . . . . . . . | 0 0 0 1 | E3 0 0 1 1 | E4 0 1 0 0 | 1 0 | 1 0 0 0 | .EMETTRE |
| EP09 108 SEGMT | . . 0 . . . . . 1 . . . | | E3 0 0 1 1 | E4 0 1 0 0 | 1 0 | 1 0 0 0 | .EMETTRE |
| EP10 118 REPMAX | . . . . 0 . 1 . . . . . . | | E3 0 0 1 1 | E7 0 1 1 1 | 1 1 | 0 0 0 0 | |
| EP11 118 TOUT | . . . 0 1 . . . . . . . . | | E3 0 0 1 1 | E7 0 1 1 1 | 1 1 | 0 0 0 0 | |
| EP12 120 ETDIF | 0 . . . . . . . 1 . . . . | | E4 0 1 0 0 | E7 1 0 0 0 | 1 0 | 0 0 0 0 | |
| EP13 109 SEGMT . PEMFIN/ | . . 0 . . . . . 1 . . 1 . . | | E4 0 1 0 0 | E5 0 1 0 1 | 1 0 | 1 0 0 0 | .EMETTRE |
| EP14 114 SEGMT . PEMFIN | . . 0 . . . . . 1 . . 1 . . | | E4 0 1 0 0 | E6 0 1 1 0 | 1 0 | 0 1 1 1 | .EPRES |
| EP15 119 TOUT | . . . 0 1 . . . . . . . . | | E4 0 1 0 0 | E7 0 1 1 1 | 1 1 | 0 0 0 0 | |
| EP16 110 RR | 0 . . . . 1 . . . . . . | 0 0 0 1 | E5 0 1 0 1 | E4 0 1 0 0 | 1 0 | 0 0 0 1 | .RR |
| EP17 111 REJ | 0 . . . . . . . . . . . | 0 0 1 0 | E5 0 1 0 1 | E3 0 0 1 1 | 1 0 | 0 0 1 1 | .REJ |
| EP18 112 RNR | 0 . . . . . . . . . . . | 0 0 1 1 | E5 0 1 0 1 | E7 0 1 1 1 | 1 1 | 0 1 0 0 | .RNR |
| EP19 113 TOUT | . . . 0 1 . . . . . . . | | E5 0 1 0 1 | E7 0 1 1 1 | 1 1 | 0 0 0 0 | |
| EP20 115 RR | 0 . . . . . . . . . . | 0 0 0 1 | E6 0 1 1 0 | E7 0 1 1 1 | 1 1 | 0 0 1 0 | .PRFIN |
| EP21 116 REJ | 0 . . . . . . . . . . | 0 0 1 0 | E6 0 1 1 0 | E3 0 0 1 1 | 1 0 | 0 0 1 1 | .REJ |
| EP22 112 RNR | 0 . . . . . . . . . . | 0 0 1 1 | E6 0 1 1 0 | E7 0 1 1 1 | 1 1 | 0 1 0 0 | .RNR |
| EP23 117 TOUT | . . . 0 1 . . . . . . . | | E6 0 1 1 0 | E7 0 1 1 1 | 1 1 | 0 0 0 0 | |
| EP24 125 RLIB/ . REQ | . . . 0 . . 0 . . 1 . . | | E7 0 1 1 1 | E3 0 0 1 1 | 1 0 | 0 0 0 0 | |
| EP25 124 RLIB/.REQ/.SEGMT | . . 0 . 0 . 0 . 1 0 . . | | E7 0 1 1 1 | E7 0 1 1 1 | 1 1 | 0 1 1 1 | .EPRES |
| EP26 141 RLIB.SEC.PRES | . . 0 . 0 . 1 . . . 0 . | 1 0 1 0 | E7 0 1 1 1 | ER2 0 0 1 0 | 0 1 | 1 0 1 0 | .HD-PRES |
| EP27 140 RLIB.SEC.LIBR | . . 0 . 0 . 1 . . . 0 . | 0 0 0 1 | E7 0 1 1 1 | ER2 0 0 1 0 | 0 1 | 1 0 0 1 | .HD-LIBR |
| EP28 140 RLIB.PRIM.TRSUI | . . 0 . 0 . 1 . . . 1 . | | E7 0 1 1 1 | ER2 0 0 1 0 | 0 1 | 1 0 0 1 | .HD-LIBR |
| EP29 142 TOUT | . . 0 . 1 . . . . . . | | E7 0 1 1 1 | ER2 0 0 1 0 | 0 1 | 1 0 1 1 | .HD-TO |
| EP30 121 DIFF | . . 0 . 0 . . . . . | 0 0 1 1 | E8 1 0 0 0 | E8 1 0 0 0 | 1 0 | 1 0 0 0 | .EMETTRE |
| EP31 123 PFIN | . . 0 . 0 . . . . . | 1 0 0 1 | E8 1 0 0 0 | ER2 0 0 1 0 | 0 1 | 1 0 0 1 | .HD-LIBR |
| EP32 122 TOUT | . . 0 . 1 . . . . . | | E8 1 0 0 0 | ER2 0 0 1 0 | 0 1 | 1 0 0 1 | .HD-TO |

0 104 991

**Tableau VIIa**

**Equations booléennes de l'automate émetteur - circuit 1105**
**Fonction "produits"**

```
EP00 = /T1 * /J3 * J2 * J1 * /J0 * P3 * P2 * P1 * P0
EP01 = /T1 * /J3 * /J2 * J1 * /J0 * P3 * P2 * P1 * P0

EP02 = /T1 * /J3 * J2 * /J1 * /J0 * /P3 * /P2 * /P1 * P0

EP03 = /T1 * J3 * J2 * /J1 * J0 * /P3 * /P2 * P1 * /P0
EP04 = /T1 * J3 * J2 * /J1 * /J0 * /P3 * /P2 * P1 * /P0
EP05 = /T0 * REQ * /J3 * /J2 * /J1 * J0 * /P3 * /P2 * P1 * /P0
EP06 = /T1 * /J3 * J2 * J1 * J0 * /P3 * /P2 * P1 * /P0
EP07 = /T1 * /J3 * /J2 * J1 * /J0 * /P3 * /P2 * P1 * /P0

EP08 = /T1 * /J3 * /J2 * /J1 * J0 * /P3 * /P2 * P1 * P0
EP09 = /T1 * DESTOK * /P3 * /P2 * P1 * P0
EP10 = /T0 * REPMAX * /P3 * /P2 * P1 * P0
EP11 = /T0 * TOUT * /P3 * /P2 * P1 * P0

EP12 = /T3 * DIF * /P3 * P2 * /P1 * /P0
EP13 = /T1 * DESTOK * /PEMFIN * /P3 * P2 * /P1 * /P0
EP14 = /T1 * DESTOK * PEMFIN * /P3 * P2 * /P1 * /P0
EP15 = /T0 * TOUT * /P3 * P2 * /P1 * /P0

EP16 = /T3 * /J3 * /J2 * /J1 * J0 * /P3 * P2 * /P1 * P0
EP17 = /T3 * /J3 * /J2 * J1 * /J0 * /P3 * P2 * /P1 * P0
EP18 = /T3 * /J3 * /J2 * J1 * J0 * /P3 * P2 * /P1 * P0
EP19 = /T0 * TOUT * /P3 * P2 * /P1 * P0

EP20 = /T3 * /J3 * /J2 * /J1 * J0 * /P3 * P2 * P1 * /P0
EP21 = /T3 * /J3 * /J2 * J1 * /J0 * /P3 * P2 * P1 * /P0
EP22 = /T3 * /J3 * /J2 * J1 * J0 * /P3 * P2 * /P1 * /P0
EP23 = /T0 * TOUT.* /P3 * P2 * P1 * /P0

EP24 = /T0 * /RLIB * REQ * /P3 * P2 * P1 * P0
EP25 = /T1 * /TOUT * /RLIB * DESTOK * /REQ * /P3 * P2 * P1 * P0
EP26 = /T1 * /TOUT * RLIB * /PRIM * J3 * /J2 * J1 * /J0 * /P3 * P2 * P1
       * P0
EP27 = /T1 * /TOUT * RLIB * /PRIM * /J3 * /J2 * /J1 * J0 * /P3 * P2 *
       P1 * P0
EP28 = /T1 * /TOUT * RLIB * PRIM * /P3 * P2 * P1 * P0
EP29 = /T1 * TOUT * /P3 * P2 * P1 * P0

EP30 = /T1 * /TOUT * /J3 * /J2 * J1 * J0 * P3 * /P2 * /P1 * /P0
EP31 = /T1 * /TOUT * J3 * /J2 * /J1 * J0 * P3 * /P2 * /P1 * /P0
EP32 = /T1 * TOUT * P3 * /P2 * /P1 * /P0
```

**Tableau VIIb**

**Equations de l'automate émetteur - circuit 1105**
**Fonctions "Sommes'**

NOE= EP01+EP02+EP03+EP04+EP05+EP06+EP07+EP10+EP11+EP13+EP15+EP17+EP18
+EP19+EP20+EP21+EP22+EP23+EP24+EP25

N1E =EP00+EP02+EP03+EP04+EP05+EP06+EP10+EP11+EP14+EP15+EP17+EP18+EP19
+EP20+EP21+EP22+EP23+EP24+EP25+EP26+EP27+EP28+EP29+EP31+EP32

N2E =EP02+EP03+EP04+EP06+EP08+EP09+EP10+EP11+EP13+EP14+EP15+EP16+EP18
EP19+EP20+EP22+EP23+EP25

N3E =EP02+EP06+EP12+EP30

FOE =EP05+EP14+EP16+EP17+EP21+EP25+EP27+EP28+EP29+EP31+EP32

F1E =EP14+EP17+EP20+EP21+EP25+EP26+EP29+EP32

F2E =EP05+EP14+EP18+EP22+EP25

F3E =EP08+EP09+EP13+EP26+EP27+EP28+EP29+EP30+EP31+EP32

F4E =EP00+EP01+EP02+EP03+EP04+EP06+EP07+EP10+EP11+EP15+EP18+EP19+EP20
+EP22+EP23+EP25+EP26+EP27+EP28+EP29+EP31+EP32

F5E =EP03+EP04+EP05+EP08+EP09+EP10+EP11+EP12+EP13+EP14+EP15+EP16+EP17
+EP18+EP19+EP20+EP21+EP22+EP23+EP24+EP25+EP30

**Tableau VIII**

```
                    EVENEMENT                        ETAT ACTUEL   ETAT SUIV      AFFICHAGE   FONCTION

          IDENTIFICATION              ENTREES


RP00  101 LIBR            . . 0 . . . . . . . . . . .   0 0 0 1  ERO 1 1 1 1  ERO 1 1 1 1  . 1  0 1 1 0  .EVEIL
RP01  103 TAIL            . . 0 . . . .. . . . . . .    0 1 1 1  ERO 1 1 1 1  ERO 1 1 1 1  . 1  0 1 0 1  .RTAIL
RP02  104 ACTIV           . . 0 . . . . . . . . . . .   0 1 1 0  ERO 1 1 1 1  ER2 0 0 1 0  . 1  . . . .
RP03  102 DISC            . . 0 . . . . . . . . . . .   0 0 1 0  ERO 1 1 1 1  ER1 0 0 0 1  . 1  . . . .
RP04  106 TST             . . 0 . . . . . . . . . . .   0 1 0 1  ER1 0 0 0 1  ER1 0 0 0 1  . 1  0 1 1 1  .RTST
RP05  105 MES             . . 0 . . . . . . . . . . .   0 1 0 0  ER1 0 0 0 1  ERO 1 1 1 1  . 1  0 0 0 0
RP06  148 DID 1.2.3.      . . 0 . . . . . . . . . . .   1 0 1 1  ER2 0 0 1 0  ER2 0 0 1 0  . 1  1 0 0 0  .RDID
RP07  126 PRND            . . 0 . . . . . . . . . . .   1 0 1 1  ER2 0 0 1 0  E3  0 0 1 0  . 1  1 0 0 0  .RDID
RP08  139 PRD             . . 0 . . . . . . . . . . .   1 1 0 0  ER2 0 0 1 0  R4  0 1 0 0  . 0  1 0 1 0  .DIAL-SEC-PRD
RP09  143 LIBR . REQ      . . 0 . . . . . . . . 1 . .   0 0 0 1  ER2 0 0 1 0  R6  0 1 1 0  . 1  0 0 0 0
RP10  145 TAIL            . . 0 . . . . . . . . . . .   0 1 1 1  ER2 0 0 1 0  ERO 1 1 1 1  . 1  0 1 0 1  .RTAIL
RP11  146 DISC            . . 0 . . . . . . . . . . .   0 0 1 0  ER2 0 0 1 0  ER1 0 0 0 1  . 1  0 0 0 0
RP12  147 DIFF            . . 0 . . . . . . . . . . .   0 0 1 1  ER2 0 0 1 0  ER2 0 0 1 0  . 1  1 1 0 1  .RPDIF
RP13  127 PAQ OK          . 0 . . . 0 . . . . . . 1    . . . .   R3  0 0 1 1  R5  0 1 0 1  . 0  0 0 0 1  .RR
RP14  128 PAQ OK /        . 0 . . . 0 . . . . . 0      . . . .   R3  0 0 1 1  R5  0 1 0 1  . 0  0 0 1 1  .REJ
RP15  129 ENGORG          . 0 . . . 1 . . . . . . .    . . . .   R3  0 1 0 0  R6  0 1 1 0  . 1  0 1 0 0  .RNR
RP16  136 PAQ OK          . 0 . . . 0 . . . . . . 1    . . . .   R4  0 1 0 0  R6  0 1 1 0  . 1  0 0 1 0  .RRFIN
RP17  137 PAQ OK /        . 0 . . . 0 . . . . . 0      . . . .   R4  0 1 0 0  R5  0 1 0 1  . 0  0 0 1 1  .REJ
RP18  138 ENGORG          . 0 . . . 1 . . . . . . .    . . . .   R4  0 1 0 0  R6  0 1 1 0  . 1  0 1 0 0  .RNR
RP19  149 PCRT            . . 0 . 0 . . . . . . .      1 0 0 0   R5  0 1 0 1  R3  0 0 1 1  . 0  1 0 1 1  .RPCRT
RP20  131 PFIN            . . 0 . 0 . . . . . . .      1 0 0 1   R5  0 1 0 1  R4  0 1 0 0  . 0  1 1 0 0  .RPFIN
RP21  132 TOUT            . . 0 . 1 . . . . . . .      . . . .   R5  0 1 0 1  R6  0 1 1 0  . 1  0 0 0 0
RP22  133 ELIB/. PCRT     . . 0 . 0 . 0 . . . . .      1 0 0 0   R6  0 1 1 0  R3  0 0 1 1  . 0  1 0 1 1  .RPCRT
RP23  134 ELIB/. PFIN     . . 0 . 0 . 0 . . . . .      1 0 0 1   R6  0 1 1 0  R4  0 1 0 0  . 0  1 1 0 0  .RPFIN
RP24  141 ELIB.SEC.PRES   . . 0 . 0 . 1 . . . 0 .      1 0 1 0   R6  0 1 1 0  ER2 0 0 1 0  . 1  0 0 0 0
RP25  140 ELIB.SEC.LIBR   . . 0 : 0 . 1 . . . 0 .      0 0 0 1   R6  0 1 1 0  ER2 0 0 1 0  . 1  0 0 0 0
RP26  140 ELIB.PRIM.TRSUI . . 0 . 0 . 1 . . . 1 .      . . . .   R6  0 1 1 0  ER2 0 0 1 0  . 1  0 0 0 0
RP27  142 TOUT            . . 0 . 1 . . . . . . .      . . . .   R6  0 1 1 0  ER2 0 0 1 0  . 1  0 0 0 0
RP28  144 ETDIF           . 0 . . . . . 1 . . . .      . . . .   R6  0 1 1 0  R8  1 0 0 0  . 0  0 0 0 0
RP29  123 PFIN            . . 0 . 0 . . . . . . .      1 0 0 1   R8  1 0 0 0  ER2 0 0 1 0  . 1  0 0 0 0
RP30  122 TOUT            . . 0 . 1 . . . . . . .      . . . .   R8  1 0 0 0  ER2 0 0 1 0  . 1  0 0 0 0
```

**Tableau IXa**

**Equations booléennes de l'automate récepteur - circuit 1106**
**Fonctions "Produits"**

```
RP00 = /T1 * /J3 * /J2 * /J1 * JO * P3 * P2 * P1 * PO
RP01 = /T1 * /J3 * J2 * J1 * JO * P3 * P2 * P1 * PO
RP02 = /T1 * /J3 * J2 * J1 * /JO * P3 * P2 * P1 * PO
RP03 = /T1 * /J3 * /J2 * J1 * /JO * P3 * P2 * P1 * PO

RP04 = /T1 * /J3 * J2 * /J1 * JO * /P3 * /P2 * /P1 * PO
RP05 = /T1 * /J3 * J2 * /J1 * /JO * /P3 * /P2 * /P1 * PO

RP06 = /T1 * J3 * /J2 * J1 * JO * /P3 * /P2 * P1 * /PO
RP07 = /T1 * J3 * J2 * /J1 * JO * /P3 * /P2 * P1 * /PO
RP08 = /T1 * J3 * J2 * /J1 * /JO * /P3 * /P2 * P1 * /PO
RP09 = /T1 * REQ * /J3 * /J2 * /J1 * JO * /P3 * /P2 * P1 * /PO
RP10 = /T1 * /J3 * J2 * J1 * JO * /P3 * /P2 * P1 * /PO
RP11 = /T1 * /J3 * /J2 * J1 * /JO * /P3 * /P2 * P1 * /PO
RP12 = /T1 * /J3 * /J2 * J1 * JO * /P3 * /P2 * P1 * /PO

RP13 = /T2 * /ENGOR * POK * /P3 * /P2 * P1 * PO
RP14 = /T2 * /ENGOR * /POK * /P3 * /P2 * P1 * PO
RP15 = ENGOR * /P3 * /P2 * P1 * PO

RP16 = /T2 * /ENGOR * POK * /P3 * P2 * /P1 * /PO
RP17 =/T2 * /ENGOR * /POK * /P3 * P2 * /P1 * /PO
RP18 =/T2 * ENGOR * /P3 * P2 * /P1 * /PO
RP19 =/T1 * /TOUT * J3 * /J2 * /J1 * /JO * /P3 * P2 * /P1 * PO
RP20 =/T1 * /TOUT * J3 * /J2 * /J1 * JO * /P3 * P2 * /P1 * PO
RP21 =/T1 * TOUT * /P3 * P2 * /P1 * PO

RP22 =/T1 * /TOUT * /ELIB * J3 * /J2 * /J1 * /JO * /P3 * P2 * P1 *
       /PO
RP23 =/T1 * /TOUT * /ELIB * J3 * /J2 * /J1 * JO * /P3 * P2 * P1 * /PO
RP24 =/T1 * /TOUT * ELIB * /PRIM * J3 * /J2 * J1 * /JO * /P3 * P2 *
       P1 * /PO
RP25 =/T1 * /TOUT * ELIB * /PRIM * /J3 * /J2 * /J1 * JO * /P3 * P2
       P1 * /PO
RP26 =/T1 * /TOUT * ELIB * PRIM * /P3 * P2 * P1 * /PO
RP27 =/T1 * TOUT * /P3 * P2 * P1 * /PO
RP28 =/T2 * DIF * /P3 * P2 * P1 * /PO

RP29 =/T1 * /TOUT * J3 * /J2 * /J1 * JO * P3 * /P2 * /P1 * /PO
RP30 =/T1 * /TOUT * P3 * /P2 * /P1 * /PO
```

**Tableau IXb**

Equations de l'automate récepteur - circuit 1106
Fonctions "Sommes''

NOR  =RP00+RP01+RP03+RP04+RP05+RP07+RP10+RP11+RP13+RP14+RP17+RP19+RP22

N1R  =RP00+RP01+RP02+RP05+RP06+RP07+RP09+RP10+RP12+RP15+RP16+RP18+RP19
     +RP21+RP22+RP24+RP25+RP26+RP27+RP29+RP30

N2R  =RP00+RP01+RP05+RP08+RP09+RP10+RP13+RP14+RP15+RP16+RP17+RP18+RP20
     +RP21+RP23

N3R  =RP00+RP01+RP05+RP10+RP28


FOR  =RP01+RP04+RP07+RP10+RP12+RP13+RP14+RP17+RP19+RP22

F1R  =RP00+RP04+RP08+RP14+RP16+RP17+RP19+RP22

F2R  =RP00+RP01+RP04+RP10+RP12+RP15+RP18+RP20+RP23+

F3R  =RP06+RP07+RP08+RP12+RP19+RP20+RP22+RP23

F4R  =RP00+RP01+RP02+RP03+RP04+RP05+RP06+RP09+RP10+RP11+RP12+RP15+RP16
     RP18+RP21+RP24+RP25+RP26+RP27+RP29+RP30


Dans le coupleur 1401, le fil 1402 transmet en série les bits de données reçus de la boucle et le fil 1403 le signal d'horloge bit. Les fils 1402 et 1403 sont reliés à l'entrée d'un circuit de base temps esclave 1404 et à l'entrée d'un convertisseur série-parallèle 1405. Le circuit de base de temps 1404 a une structure analogue au circuit montré à la Fig. 5. Il comprend un automate de synchronisation 1406, un compteur d'octets 1407 et un circuit décodeur de rang de trames 1408.

La sortie parallèle du convertisseur série-parallèle 1405 est reliée à l'entrée d'un circuit de sélection 1409 sélectant les informations à reboucler modulo trame ou modulo multitrame. Le circuit 1409 est commandé en fonction de la mémoire de connexion des données transmises en mode circuit.

Une sortie 1410 du circuit de sélection 1409 est reliée à l'entrée de données d'une mémoire silo 1411 mémorisant les données à reboucler modulo trame et une sortie 1412 reliée à l'entrée d'une mémoire silo 1413 mémorisant les données à reboucler modulo multitrame.

Le boucleur 1401 comprend encore une horloge bit maîtresse 1426 alimentant une seconde base de temps 1414 comprenant un compteur d'octets 1415 et un circuit décodeur de rang de trame 1416.

La mémoire silo ou FiFo 1411 a son entrée d'horloge reliée à la sortie d'un multiplexeur 1417 dont une entrée est reliée à la sortie d'une porte ET 1418 et dont l'autre entrée est reliée à la sortie d'une porte ET 1419. La porte ET 1418 a une entrée reliée a la sortie du compteur 1407 et une autre entrée reliée à la sortie de l'horloge maîtresse 1426. La porte ET 1419 a une entrée reliée à la sortie du compteur 1415 et une autre entrée reliée à la sortie de l'horloge maîtresse 1426.

La mémoire de multitrame 1413 a son entrée d'horloge reliée à la sortie d'un multiplexeur 1420 dont une entrée est reliée à la sortie d'une porte ET 1421 et l'autre entrée à la sortie d'une porte ET 1422. Une entrée de la porte ET 1421 est reliée à la sortie du décodeur 1408 et l'autre entrée à la sortie de l'horloge maîtresse 1426. Une entrée de la porte ET 1422 est reliée au décodeur 1416 et l'autre entrée à la sortie de l'horloge maîtresse 1426.

La sortie de données de la mémoire 1411 est reliée, d'une part, à un multiplexeur 1423 et, d'autre part, à un circuit de supervision 1424 surveillant, dans chaque trame, l'octet de jeton et, éventuellement, le régénérant. Le circuit 1424 a une entrée d'horloge reliée au compteur 1415. La sortie du circuit 1424 est reliée à une entrée du multiplexeur 1423.

La sortie de données de la mémoire 1413 est reliée à une entrée du multiplexeur 1423. Enfin, une entrée du multiplexeur 1423 est également reliée à l'horloge maîtresse 1426.

La sortie du multiplexeur 1423 est reliée à l'entrée parallèle d'un convertiseur parallèle-série 1425 dont la sortie série est reliée à l'entrée de l'unité 1400. En pratique, si les circuits 1400 peuvent être montés sur une seule carte de circuit imprimé, le convertisseur 1425 peut être omis ainsi que, dans l'unité 1400, le convertisseur 405 et la base de temps 403, cette dernière étant remplacée par la base de temps 1414.

Le boucleur 1401 fait donc passer dans la mémoire 1411 les données des sous-trames STP et STCT et, dans la mémoire 1413, les données de la sous-trame STCD. En effet, les premières sont, en ce qui concerne leur contenu, à répéter telle qu'elles arrivent au coupleur, à chaque trame, tandis que les secondes peuvent être stockées pendant le temps d'une multitrame avant d'être réinjectées.

Les lectures des mémoires 1411 et 1413 se font au rythme de l'horloge maîtresse 1426 dont le but est de restaurer la synchronisation quelle que soit la durée de transmission dans la boucle. En pratique, l'horloge 1426 peut être tripliquée et associé à un circuit de décision majoritaire classique.

Dans l'unité 1400, chaque octet de jeton est transmis à l'automate réception qui, d'une part, détecte s'il contient le contenu du jeton ou son complément. Dans le premier cas, le nouveau jeton transmis est le complément du premier. Dans le second, le paquet est détruit et un jeton LIBRE est émis.

Enfin, le microprocesseur de l'unité 1400 tient à jour la mémoire de connexion.

## Revendications

1) Réseau local hybride de communication en mode circuit et mode paquet entre des unités de contrôle de grappe (UCG) servant chacune d'interface entre une grappe de terminaux de différents types et une boucle (2) portant un multiplex temporel, une desdites unités servant d'unité de contrôle de boucle (UCB), les communications en mode paquet étant commandées par un jeton, l'en-tête de chaque paquet comprenant l'adresse de la station destinataire et l'adresse de la station d'origine, le multiplex temporel étant arrangé en multitrames de $\underline{M}$ trames 0 à (M-1), chaque trame comprenant P intervalles de temps iT0 à iT(P-1) affectes a la transmission d'un paquet par trame, dans chaque trame l'iT0 contenant le motif de synchronisation de la trame, l,iT1 contenant l'octet de jeton du paquet de la trame, les iT2 à iTh contenant l'en-tête dudit paquet, puis les iT(h+1) à iTx contenant les données utiles dudit paquet et, enfin les iT(x+1) à iT(P-1) contenant des données de communication de type circuit, caractérisé en ce que, dans un échange de messages en mode paquet entre deux unités quelconques (UCG et UCB), les trames successives sont utilisées alternativement par lesdites unités et l'intervalle de temps iTx de chaque trame est réservé à l'acquittement par une unité du paquet qu'elle a reçu dans la trame précédente, l'unité déclenchant le dialogue, dite unité primaire, substituant au jeton de disponibilité (LIBR) reçu un jeton de segment de début de message (PRND ou PRD) suivi de l'identité de l'unité appelée, dite unité secondaire, de sa propre identité ou identité de l'unité primaire, du champ de paquet et d'un acquittement sans signification, l'unité secondaire recevant l'en-tête et y reconnaissant son identité, substituant au jeton de segment de début un jeton d'attente (PRES) suivi de l'identité de l'unité primaire, de sa propre identité, d'une suite d'octets sans signification, jusqu'à l'instant de l'intervalle iTx où elle insère l'acquittement du premier segment reçu de l'unité primaire, chaque unité appelante ou appelée pouvant ensuite échanger alternativement des segments de message, chaque unité primaire ou secondaire envoyant le dernier segment de son message en utilisant un jeton de fin (PFIN ou PRD), l'unité primaire libérant ensuite la communication en substituant au dernier jeton reçu de l'unité secondaire le jeton de disponibilité (LIBR).

2) Réseau suivant la revendication 1, caractérisé en ce qu'après le dernier paquet comportant un jeton de fin (PFIN), une séquence de trois trames est prévue pendant lesquelles ont successivement envoyé un segment commençant par un jeton d'attente (PRES) l'unité secondaire, puis l'unité primaire et enfin l'unité secondaire, l'unité primaire substituant au troisième jeton d'attente (PRES) le jeton de disponibilité (LIBR).

3) Réseau suivant la revendication 1 ou 2, caractérisé en ce qu'après avoir reçu de l'unité primaire le second segment d'une communication, l'unité secondaire peut substituer au jeton reçu un jeton de segment de début (PRND ou PRD).

4) Réseau suivant l'une des revendications 1 à 3, caractérisé en ce que les unités utilisent pour leurs échanges de messages, en plus des jetons de segment de début, d'attente et de fin, des jetons de segment courant, non premier, non dernier (PCRT).

5) Réseau suivant l'une des revendications 1 à 4, caractérisé en ce que chaque unité de contrôle de grappe (UCG) entrant en service dans la boucle substitue au jeton de disponibilité (LIBR) un jeton de commande (EVEIL) suivi de l'identité de l'unité de contrôle de boucle (UCB) et de sa propre identité.

6) Réseau suivant la revendication 5, caractérisé en ce que l'unité de contrôle de boucle (UCB) peut, à la réception d'un jeton de disponibilité (LIBR), lui substituer un jeton de commande suivi de l'identité d'une unité de contrôle de grappe (UCG), le jeton de commande pouvant avoir plusieurs contenus, tel que l'indication de la taille maximale d'un paquet (TAIL 32, TAIL 64, TAIL 96), mise en supervision interne (DISC), mise en test (TST), mise en service (MES), activation (ACTIV).

7) Réseau suivant l'une des revendications 1 à 6, caractérisé en ce que le nombre des segments transmis par une unité en cours d'un échange de messages est limité à une valeur prédéterminée.

8) Réseau suivant l'une des revendications 1 à 7, caractérisé en ce que l'acquittement contient le numéro du segment reçu de l'unité primaire ou de l'unité secondaire au cours d'un échange de message, l'acquittement indiquant un segment mal reçu entraînant la répétition du segment concerné, le nombre de répétition etant limité.

9) Réseau suivant la revendication 1, dans lequel chaque unité de contrôle de grappe ou de boucle comprend, connectés en parallèle sur la boucle, côté entrant, une base de temps (403), un circuit de traitement de données circuit (406) et un convertisseur série-parallèle (405) et, côté sortant, un multiplexeur (411), dont

27

une entrée est reliée à la sortie du circuit de traitement de données circuit (406) et dont une autre entrée est reliée à la sortie d'un convertisseur parallèle-série (408), caractérisé en ce que la sortie série du convertisseur série-parallèle (405) est reliée à l'entrée d'un registre à décalage (407) apportant un retard d'un octet dont la sortie est reliée à l'entrée série du convertisseur parallèle-série (408), la sortie parallèle du convertisseur série-parallèle (405) étant reliée à un bus réception (BUS REC) auquel sont reliés un décodeur d'en-tête (412), un circuit de réception de données paquet (413), un circuit de commande (414) recevant notamment le jeton de chaque paquet et un circuit d'émission de données paquet (415), l'entrée parallèle du convertisseur parallèle-série (408) étant reliée à un bus émission (BUS EMIS) auquel sont reliés le décodeur d'en-tête (412), ledit circuit de réception de données paquet (413), ledit circuit de commande (414), ledit circuit d'émission de données paquet (415) et un générateur d'en-tête (416), lesdits circuits de réception (413) et d'émission (415) de données paquet étant reliés par un bus d'adresse (BUS ADR) et un bus de données (BUS DON) à un microprocesseur (417), lui-même relié aux terminaux de la grappe desservie par l'unité, ledit circuit de commande (414) étant relié auxdits circuit décodeur d'en-tête (412), de réception (413) et d'émission (415) de données paquet par des fils individuels transmettant des informations d'événement ou d'état et fonctionnant en séquenceur.

10) Réseau suivant la revendication 9, caractérisé en ce que le circuit décodeur d'en-tête (412) comprend un circuit de comparaison d'identité d'unité destinataire (602) dont la sortie est reliée à une entrée correspondante du circuit de commande (414) par un fil (DESTOK) passant à l'état "1" quand l'identité propre de l'unité est reconnue et un comparateur (608) d'identité d'unité destinatrice dont la sortie est reliée au circuit de commande par un fil (ORIGOK) passant à "1" quand l'identité de l'autre unité avec laquelle l'unité dialogue est reconnue, et un détecteur d'acquittement positif (614) dont la sortie est reliée au circuit de commande (414) par un fil (NrOK) passant à "1" pour un acquittement positif.

11) Réseau suivant la revendication 9 ou 10, caractérisé en ce que le circuit de réception de données paquet (415) comprend une mémoire à accès aléatoire (701) dont l'entrée de données est reliée au bus de réception (BUS REC), dont la sortie de données est reliée au bus de données (BUS DON) et dont l'entrée d'adresse d'écriture est reliée à la sortie d'un compteur (706) dont l'entrée est reliée à la sortie d'un registre d'adresse de début de paquet (703) laquelle est également reliée à l'entrée d'une mémoire silo (702) dont la sortie est reliée au bus de données (BUS DON), la sortie dudit compteur (706) étant également reliée à l'entrée dudit registre (703), la mémoire à accès aléatoire (701) ayant une entrée d'adresse de lecture reliée au bus d'adresse (BUS ADR), le registre (703) ayant une entrée de commande reliée au circuit de commande (414) par un fil (RR) transmettant l'information de confirmation d'acquittement, le compteur (706) ayant une entrée de commande reliée au circuit de commande (414) par un fil (REJ) transmettant une information de rejet du dernier paquet reçu, et la mémoire silo (702) étant reliée au circuit de commande (414) par trois fils (RR, RRFIN, RNR) transmettant respectivement les informations de confirmation de bonne réception ou de mauvaise réception du dernier paquet reçu.

12) Réseau suivant l'une des revendications 9 à 11, caractérisé en ce que le circuit d'émission de données paquet (415) comprend une mémoire à accès aléatoire (801) dont l'entrée de données est reliée au bus de données (BUS DON), dont la sortie de données est reliée au bus d'émission (BUS EMIS) et dont l'entrée d'adresses est reliée, d'une part, au bus d'adresse (BUS ADR) et, d'autre part, à la sortie d'un compteur d'octets émis (804), ladite mémoire à accès aléatoire (801) étant arrangée en une pluralité de zones capables chacune de mémoriser un paquet entier destiné à une autre unité et étant associée à un registre d'état de zones (805) et à une mémoire de pointeurs à accès aléatoire (806), l'entrée de données du registre d'état de zones (805) étant reliée à la sortie d'un premier aiguilleur (807) et son entrée d'adresse étant reliée, d'une part, au bus d'adresse (BUS ADR) et, d'autre part, à un registre de début de zone (810), la mémoire de pointeurs (806) ayant son entrée de données reliée à la sortie d'un second aiguilleur (811), son entrée d'adresse reliée, d'une part, au bus d'adresse (BUS ADR), d'autre part, à la sortie d'une mémoire silo (813) et, enfin, à la sortie d'un registre de réception d'adresse (818) d'unité interlocutrice relié au bus de réception (BUS REC), la sortie de données de la mémoire de pointeurs (806) étant reliée à l'entrée du registre de début de zone (810), ainsi qu'à l'entrée d'un compteur (804) des octets transmis, l'entrée de la mémoire silo (813) étant reliée au bus de données (BUS DON), le compteur (804) ayant egalement sa sortie reliée à un premier registre tampon (821) dont la sortie est reliée à l'entrée d'un second registre tampon (823) dont la sortie est reliable sélectivement à l'entrée du compteur d'octets (804), ledit second registre (823) ayant une entrée de commande reliée au circuit de commande (414) par un fil (REJ) transmettant l'information de confirmation de l'acquittement du segment émis deux trames auparavant.

13) Réseau suivant l'une des revendications 9 à 12, caractérisé en ce que le circuit de commande (414) comprend un convertisseur d'entrée (1102), un automate de réception (1105) et un automate d'émission (1106) interconnectés et constitués par des circuits du type PAL.

**Patentansprüche**

1. Lokales hybrides Nachrichtennetz in Durchschalte- und Paketvermittlungsbetrieb zwischen zwei Bündel-Steuereinheiten (UCG), von denen jede als Interface-Schaltung zwischen einer Gruppe von Anschlüssen unterschiedlichen Typs und einer ein Zeitmultiplex führenden Ringleitung (2) wirkt, wobei eine der genannten Einheiten als Steuereinheit (UCB) der Ringleitung dient, die Nachrichtenübertragungen im Paketvermittlungsbetrieb durch ein Zeichen gesteuert sind, das Vorwort jedes Paketes die Adresse der angerufenen Station und die Adresse der rufenden Station enthält, das Zeitmultiplex in Vielfachrahmen mit M Rahmen 0 bis (M-1) angeordnet ist, jeder Rahmen P Zeitintervalle iT0 bis iT(P-1) für die Übertragung eines Paketes je Rahmen enthält, wobei jeder Rahmen das iT0 das Synchronisiermuster des Rahmens enthält, das iT1 das Zeichenwort des Paketes des Rahmens enthält, die iT2 bis iTh das Vorwort des genannten Paketes enthalten, dann die iT(h + 1) bis iTx die Nutzdaten des genannten Paketes und schließlich die iT(x + 1) bis iT(P-1) die Nachrichtendaten für den Schaltungstyp enthalten, dadurch gekennzeichnet, daß während eines Nachrichten-Austausches im Paketvermittlungsbetrieb zwischen zwei beliebigen Einheiten (UCG und UCB) die aufeinanderfolgenden Rahmen abwechselnd durch die genannten Einheiten benutzt werden und das Zeitintervall iTx jedes Rahmens reserviert ist für die Quittierung des Paketes durch eine Einheit, welches Paket die Einheit in dem vorangehenden Rahmen empfangen hat, daß die den Dialog startende Einheit, erste Einheit genannt, das empfangene Freizeichen (LIBR) durch ein den Beginn der Nachricht anzeigendes Segmentzeichen (PRND oder PRD) ersetzt, dem die Identität der angerufenen Einheit, genannt zweite Einheit, seine eigene Identität oder die Identität der ersten Einheit, das Paketfeld und eine Quittierung ohne Bestimmung folgen, daß die zweite Einheit das Vorwort empfängt und daraus seine Identität erkennt, das Segmentzeichen für den Anfang durch ein Wartezeichen (PRES) ersetzt, das gefolgt wird von der Identität der ersten Einheit, seiner eigenen Identität, einer Folge von Worten ohne Bestimmung, bis zum Zeitpunkt des Intervalls iTx, in dem es die Quittierung des von der ersten Einheit empfangenen ersten Segmentes enthält, daß jede rufende oder angerufene Einheit im folgenden alternativ Nachrichten-Segmente austauschen kann, daß jede erste oder zweite Einheit das letzte Segment seiner Nachricht sendet und dabei ein Schlußzeichen (PFIN oder PRD) sendet, und daß die erste Einheit im folgenden die Nachrichtenübermittlung auslöst und dabei das von der zweiten Einheit zuletzt empfangene Zeichen durch das Freizeichen (LIBR) ersetzt.

2. Nachrichtennetz nach Anspruch 1, dadurch gekennzeichnet, daß nach dem letzten ein Schlußzeichen (PFIN) enthaltenden Paket eine Folge von drei Rahmen vorgesehen ist, während der nacheinander die zweite Einheit, dann die erste Einheit und schließlich die zweite Einheit ein Segment übertragen, das mit einem Wartesignal (PRES) beginnt, und daß die erste Einheit das dritte Wartezeichen (PRES) durch das Freizeichen (LIBR) ersetzt.

3. Nachrichtennetz nach Anspruch 1 oder 2, dadurch gekennzeichnet, daß die zweite Einheit, nachdem sie von der ersten Einheit das zweite Segment der Nachrichtenübermittlung empfangen hat, das empfangene Zeichen durch ein Start-Segmentzeichen (PRND oder PRD) ersetzen kann.

4. Nachrichtennetz nach einem der Ansprüche 1 bis 3, dadurch gekennzeichnet, daß die Einheiten für ihren Austausch der Nachrichten zusätzlich zu den Start-Segmentzeichen, den Warte- und Endzeichen die laufenden nicht-ersten, nicht-letzten Segmentzeichen (PCRT) benutzen.

5. Nachrichtennetz nach einem der Anspüche 1 bis 4, dadurch gekennzeichnet, daß jede Bündel-Steuereinheit (UCG), die in der Ringleitung in Betrieb gelangt, das Freizeichen (LIBR) durch ein Steuerzeichen (EVEIL) ersetzt, dem die Identität der Steuereinheit der Ringleitung (UCB) und seine eigene Identität folgen.

6. Nachrichtennetz nach Anspruch 5, dadurch gekennzeichnet, daß die Steuereinheit (UCB) für die Ringleitung beim Empfang eines Freizeichens (LIBR) dieses Zeichen ersetzen kann durch ein Steuerzeichen, dem die Identität der Bündel-Steuereinheit (UCG) folgt, daß das Steuerzeichen mehrere Inhalte haben kann, wie die Anzeige des maximalen Umfangs eines Paketes (TAIL 32, TAIL 64, TAIL 96), Umschaltung auf interne Überwachung (DISC), Umschaltung auf Testbetrieb (TST), Betriebs-Einschaltung (MES), Aktivierung (ACTIV).

7. Nachrichtennetz nach einem der Ansprüche 1 bis 6, dadurch gekennzeichnet, daß die Zahl der von einer Einheit im Laufe des Austausches der Nachrichten übertragenen Segmente durch einen vorbestimmten Wert begrenzt ist.

8. Nachrichtennetz nach einem der Ansprüche 1 bis 7, dadurch gekennzeichnet, daß die Quittierung die Ziffer des Segmentes enthält, das von der ersten Einheit oder der zweiten Einheit im Verlauf des Austausches der Nachricht empfangen wurde, daß die Quittierung, die ein falsch empfangenes Segment anzeigt, die Wiederholung des betreffenden Segmentes auslöst, wobei die Zahl der Wiederholungen begrenzt ist.

9. Nachrichtennetz nach Anspruch 1, bei dem jede Bündel-oder Ringleitung-Steuereinheit, parallel an die Ringleitung angeschlossen, auf der Eingangsseite eine Zeitbasis-Schaltung (403), eine Daten-Verarbeitungsschaltung (406) und einen Serien-Parallel-Umsetzer (405) und auf der Ausgangsseite einen Multiplexer (411) aufweist, dessen einer Eingang mit dem Ausgang der Daten-Verarbeitungsschaltung (406) und dessen anderer Eingang mit dem Ausgang eines Parallel-Serien-Umsetzers (408) verbunden ist, dadurch gekennzeichnet, daß der Serienausgang des Serien-Parallel-Umsetzers (405) mit dem Eingang eines Schieberegisters (407) verbunden ist, das eine Verzögerung um ein Wort bewirkt und dessen Ausgang mit dem Serieneingang des Parallel-Serien-Umsetzers (408) verbunden ist, daß der Parallelausgang des Serien-Parallel-Umsetzers (405) mit einem Empfangsbus (BUS REC) verbunden ist, an den ein Decoder (412) für das Vorwort, eine Empfangsschaltung (413) für die Datenpakete, eine im wesentlichen das Zeichen jedes Paketes empfangende Steuerschaltung (414) und eine Sendeschaltung (415) für die Datenpakete angeschlossen sind, daß der Paralleleingang des Parallel-Serien-Umsetzers (408) mit einem Sendebus (BUS EMIS) verbunden ist, an den der Decoder (412) für das Vorwort, die genannte Empfangsschaltung (413) für die Datenpakete, die genannte Steuerschaltung (414), die genannte Sendeschaltung (415) für die Datenpakete und ein Generator (416) für das Vorwort angeschlossen sind, daß die genannten Empfangsschaltungen (413) und Sendeschaltungen (415) für die Datenpakete über einen Adreßbus (BUS ADR) und einen Datenbus (BUS DON) mit einem Mikroprozessor (417) verbunden sind, der selbst mit den Anschlüssen des durch die Einheit bedienten Bündels verbunden ist, daß die genannte Steuerschaltung (414) mit der genannten Vorwort-Decoder-Schaltung (412), mit der Empfangsschaltung (413) und der Sendeschaltung (415)·für die Datenpakete über getrennte Leitungen verbunden ist, die Informationen über das Ereignis oder den Zustand übertragen und in Sequenz arbeiten.

10. Nachrichtennetz nach Anspruch 9, dadurch gekennzeichnet, daß die Decoderschaltung (412) für das Vorwort eine Vergleichsschaltung (602) für die Identität der angerufenen Einheit aufweist, deren Ausgang mit einem entsprechenden Eingang der Steuerschaltung (414) über eine Leitung (DESTOK) verbunden ist, die in den Zustand "1" gelangt, wenn die eigene Identität der Einheit erkannt ist, sowie einen Vergleicher (608) für die Identität der rufenden Einheit aufweist, deren Ausgang mit der Steuerschaltung über eine Leitung (ORIGOK) verbunden ist, die den Zustand "1" annimmt, wenn die Identität der anderen Einheit, mit der die genannte Einheit kommuniziert, erkannt ist, sowie einen Detektor (614) für eine positive Quittierung aufweist, dessen Ausgang mit der Steuerschaltung (414) über eine Leitung (NrOK) verbunden ist, die bei einer positiven Quittierung in den Zustand "1" gelangt.

11. Nachrichtennetz nach Anspruch 9 oder 10, dadurch gekennzeichnet, daß die Empfangsschaltung (415) für die Datenpakete einen RAM-Speicher (701) enthält, dessen Dateneingang mit dem Empfangsbus (BUS REC) verbunden ist, dessen Datenausgang mit dem Datenbus (BUS DON) verbunden ist und dessen Adreß-Schreibeingang mit dem Ausgang eines Zählers (706) verbunden ist, dessen Eingang mit dem Ausgang eines Paket-Start-Adreßregisters (703) verbunden ist, das ebenso mit dem Eingang eines FiFo (first in first out)-Speichers (702) verbunden ist, dessen Ausgang mit dem Datenbus (BUS DON) verbunden ist, daß der Ausgang des genannten Zählers (706) ebenso mit dem Eingang des genannten Registers (703) verbunden ist, daß der RAM-Speicher (701) einen Adreß-Leseeingang aufweist, der mit dem Adreßbus (BUS ADR) verbunden ist, daß das Register (703) einen Steuereingang aufweist, der mit der Steuerschaltung (414) über eine Leitung (RR) verbunden ist, die die Information für die Bestätigung der Quittierung sendet, daß der Zähler (706) einen Steuereingang aufweist, der mit der Steuerschaltung (414) über eine Leitung (REJ) verbunden ist, die eine Information über die Zurückweisung des letzten empfangenen Paketes sendet, und daß der FiFo-Speicher (702) mit der Steuerschaltung (414) über drei Leitungen (RR, RRFIN, RNR) verbunden ist, die die Information über die Bestätigung eines guten oder fehlerhaften Empfangs des letzten empfangenen Paketes überträgt.

12. Nachrichtennetz nach einem der Ansprüche 9 bis 11, dadurch gekennzeichnet, daß die Sendeschaltung (415) für die Datenpakete einen RAM-Speicher (801) aufweist, dessen Dateneingang mit dem Datenbus (BUS DON) verbunden ist, dessen Datenausgang mit dem Sendebus (BUS EMIS) verbunden und dessen Adreßeingang einerseits mit dem Adreßbus (BUS ADR) und andererseits mit dem Ausgang eines Zählers (804) für die gesendeten Wörter verbunden ist, daß der genannte RAM-Speicher (801) in eine Vielzahl von Speicherplätzen aufgeteilt ist, von denen jeder ein vollständiges Paket speichern kann, das für eine andere Einheit bestimmt ist, und daß der Speicher (801) mit einem Register (805) für den Zustand der Speicherplätze und mit einem Pointer-RAM-Speicher (806) verbunden ist, daß der Dateneingang des Registers (805) für den Zustand der Speicherplätze mit dem Ausgang eines ersten Schalters (807) verbunden ist und daß sein Adreßeingang einerseits mit dem Adreßbus (BUS ADR) und andererseits mit einem Register (810) für die Anfänge der Speicherplätze verbunden ist, daß der Pointer-RAM-Speicher (806) mit seinem Dateneingang mit dem Ausgang eines zweiten Schalters (811) verbunden ist und sein Adreßeingang einerseits mit dem Adreßbus (BUS ADR) und andererseits mit dem Ausgang eines FiFo-Speichers (813) und schließlich mit dem Ausgang eines Adressen-Empfangs-Registers (818) einer an den Datenbus (BUS REC) angeschlossenen Zwischeneinheit verbunden ist, daß der Datenausgang des Pointer-Speichers (806) mit dem Eingang des Registers (810) für den Anfang der Speicherplätze und mit dem Eingang eines Zählers (804) für die übertragenen Wörter verbunden ist, daß der Eingang des FiFo-Speichers (813) mit dem Datenbus (BUS DON) verbunden ist, daß der Zähler (804) mit seinem Ausgang mit einem ersten Pufferspeicher (821) verbunden ist, dessen Ausgang mit dem Eingang eines zweiten Pufferspeichers (823) verbunden ist, dessen Ausgang wahlweise an den Eingang des Wortzählers (804), an das zweite Register (823), das mit einem Steuereingang mit der Steuerschaltung (414) verbunden ist, wahlweise über eine Leitung (REJ) anschaltbar ist, die die Information über die Bestätigung der Quittierung des in dem vorletzten Rahmen übertragenen Segmentes überträgt.

13. Nachrichtennetz nach einem der Ansprüche 9 bis 12, dadurch gekennzeichnet, daß die Steuerschaltung (414) einen Eingangs-Umsetzer (1102), einen Empfangs-Automaten (1105) und einen Sende-Automaten (1106) enthält, die über Schaltungen vom PAL-Typ miteinander verbunden und ausgebildet sind.

## Claims

1) A local hybrid communication network operating in both circuit and packet modes between cluster control units (UCG), each acting as interface circuit between a cluster of terminals of different types and a loop (2) carrying a TDM multiplex, one of said units acting as a loop control unit (UCB), the communication in packet mode being controlled by a token, the header of each packet comprising the address of the called station and the address of the calling station, the TDM multiplex being arranged in multiframes comprising $\underline{M}$ frames 0-(M-1), each frame comprising P time intervals iT0-iT(P-1) for transmitting a packet per frame, the time interval iT0 in each frame containing the frame synchronizing pattern, the time interval iT1 containing the frame packet

30

token byte, the time intervals iT2-iTh containing the packet header, then the time intervals iT(h + 1)-iTx containing the useful data of said packet, and finally the time intervals iT(x + 1)-iT(P-1) containing circuit type communication data, characterized in that, during a packet mode message exchange between two units whatever (UCG and UCB), the consecutive frames are alternately used by said units, and the time interval iTx of each frame is allotted to the acknowledgment from one unit, said aknowledgment regarding the packet that said one unit had received in the preceeding frame, the unit starting the dialogue, so-called primary unit, substituting to the received idle token (LIBR) a message beginning segment token (PRND or PRD) followed by the identity of the called unit, so-called secondary unit, its own identity or primary unit identity, the packet field and a meaningless acknowledgment, the secondary unit receiving the header and recognizing its identity therein, substituting for the beginning segment token a wait token (PRES) followed by the primary unit identity and a series of meaningless bytes until the time interval iTx in which it includes the acknowledgment for the first segment received from the primary unit, each calling or called unit then possibly alternately exchanging message segments, each primary or secondary unit transmitting the last segment of its message by using an end token (PFIN or PRD), the primary unit then releasing the communication by substituting for the last token received from the secondary unit the idle token (LIBR).

2) A network according to claim 1, characterized in that, after the last packet having an end token (PFIN), a sequence of three frames is provided, during which the secondary unit, then the primary unit and finally the secondary unit have successively transmitted a segment beginning by a wait token (PRES), the primary unit substituting for the wait token (PRES) the idle token (LIBR).

3) A network according to claim 1 or 2, characterized in that after having received the second segment of a communication from the primary unit, the secondary unit possibly substitutes for the received token a beginning segment token (PRND or PRD).

4) A network according to anyone of claims 1-3, characterized in that, for exchanging messages, the units use current, not-first, not-last segment tokens (PCRT) in addition to the beginning segment, wait and end tokens.

5) A network according to anyone of claims 1-4, characterized in that each cluster control unit (UCG) becoming operative in the loop substitutes for the idle token (LIBR) a control token (EVEIL) followed by the identity of the loop control unit (UCB) and its own identity.

6) A network according to claim 5, characterized in that the loop control unit (UCB), when receiving an idle token (LIBR), possibly substitutes for this one a control token followed by the identity of a cluster control unit (UCG), the control token possibly having several contents, as the indication of the maximum size of a packet (TAIL 32, TAIL 64, TAIL 96), switching to internal supervision (DISC), switching to check (TST), switching on (MES), enabling (ACTIV).

7) A network according to anyone of claims 1-6, characterized in that the number of the segments transmitted by a unit during a message exchange is limited to a predetermined value.

8) A network according to anyone of claims 1-7, characterized in that the acknowledgment contains the number of the segment received either from the primary unit or the secondary unit during a message exchange, the acknowledgment signalling a faultly received segment causing the concerned segment to be repeated, the number of repetitions being limited.

9) A communication network according to claim 1, wherein each cluster or loop control unit comprises, parallel connected to the loop, at the ingoing side, a time base circuit (403), a circuit-type data processing circuit (406) and a series-to-parallel converter (405), and at the outgoing side, a multiplexer (411), whose one input is connected from the output (406) of the circuit type data processing circuit (406) and another input is connected from the output of a parallel-to-series converter (408), characterized in that the series output of the series-to-parallel converter (405) is connected to the input of a 1-byte delay shift register (407) whose output is connected to the series input of the series-to-parallel converter (408), the parallel output of the series-to-parallel converter (405) being connected to a reception bus (BUS REC) to which a header decoder (412), a data packet receiver circuit (413), a control circuit (414) receiving each, packet token among others and a data packet transmitter circuit (415) are connected, the parallel input of the parallel-to-series converter (408) being connected from a transmission bus (BUS EMIS) to which the header decoder (412), said data packet receiver circuit (413), said control circuit (414), said data packet transmitter circuit (415) and a header generator (416) are coupled, said data packet receiver (413) and transmitter (415) circuits being coupled through an address bus (BUS ADR) and a data bus (BUS DON) to a microprocessor (417) being itself connected to the terminals of the cluster served by the unit, said control circuit (414) being connected to said header decoder circuit (412), data packet receiver circuit (413) and data packet transmitter circuit (415) through individual leads transmitting either event or condition information and operating as a sequencer.

10) A network according to claim 9, characterized in that the header decoder circuit (412) comprises a called-unit identity comparator circuit (602) whose output is connected to a corresponding input of the control circuit (414) through a lead (DESTOK) set to "1" when the own identity of the unit has been recognized and a calling-unit identity comparator circuit (608) whose output is connected to the control circuit by a lead (ORIGOK) set to "1" when the identity of the other unit which the unit communicates with has been recognized, and a positive acknowledgment detector (614) whose output is connected to the control circuit (414) through a lead (NrOK) set to "1" when a positive acknowledgment has been detected.

11) A network according to claim 9 or 10, characterized in that the data packet receiver circuit (415) comprises a RAM memory (701) whose data input is connected from the reception bus (BUS REC), data output is connected to the data bus (BUS DON) and write address input is connected from the output of a counter (706) whose input is connected from the output of a packet beginning address register (703) which is also connected to the input of a FiFo memory (702) whose output is connected to the data bus (BUS DON), the output of said counter (706) being also connected to the input of said register (703), the RAM memory (701) having a read-out address input connected from the address bus (BUS ADR), the register (703) having a control input connected from the control circuit (414) through a lead (RR) transmitting the information of validated acknowledgment, the counter (706) having a control input connected from the control circuit (414) through a lead (REJ) transmitting an information of rejection of the last received packet, and the FiFo memory (702) being connected to the control circuit (414) through three leads (RR, RRFIN, RNR) respectively transmitting information confirming either good or faulty reception of the last received packet.

12) A network according to anyone of claims 9-11, characterized in that the data packet transmitter circuit (415) comprises a RAM memory (801) whose data input is connected from the data bus (BUS DON), data output is connected to the transmission bus (BUS EMIS) and address input is connected, on the one hand, from the address bus (BUS ADR) and, on the other hand, from the output of a transmitted byte counter (804), said RAM memory (801) being arranged in a plurality of areas, each area being able to store an entire packet ready to be transmitted to another unit and being associated to an area condition register (805) and a pointer RAM memory (806), the data input of the area condition register (805) being connected from the output of a first switch (807) and the address input of the area condition register (805) being connected, on the one hand, from the address bus (BUS ADR) and, on the other hand, from an area beginning register (810), the pointer RAM memory (806) having its data input connected from the output of a second switch (811), its address input connected, on the one hand, form the address bus (BUS ADR), on the other hand, from the output of a FiFo memory (813) and, finally, from the output of an address reception register (818) connected to the reception bus (BUS REC) to store the address of the other party, the data output of the pointer RAM memory (806) being connected to the input of the area beginning register (810) and to the input of a transmitted byte counter (804), the input of the FiFo memory (813) being connected from the data bus (BUS DON), the counter (804) having also its output connected to a first buffer register (821) whose output is connected to the input of a second buffer register (823) whose output is selectively switchable to the input of the byte counter (804), said second register (823) having a control input connected from the control circuit (414) through a lead (REJ) transmitting the information validating the acknowledgment of the segment which had been transmitted in the last but one frame.

13) A network according to anyone of claims 9-12, characterized in that the control circuit (414) comprises an input converter (1102), a receiver automaton (1105) and a transmitter automaton (1106) which are interconnected and all made of PAL type circuits.

FIG.1

TTY ou VDX    TDA

TXT

TPH

7

UCG    3.2

UCG    3.1

4~

1

1.1    UCB

5

1.2    UCG

2

3.3    3.p

UCG    UCG

6

0 104 991

0 104 991

**FIG.2**

MULTITRAME (20 trames)

| TRAME 0 | TRAME 1 | TRAME 2 | | | TRAME 19 | TRAME 0 |

125µs

**FIG.3**

SOUSTRAME PAQUET | SOUSTRAME CIRCUIT

$iT_0$  $iT_1$  $iT_2$  $iT_3$  $iT_4$  $iT_n$  $iT_{(n+1)}$  $iT_m$  $iT_{127}$

| | | | | | CHAMP DE DONNÉES | CRC | CRC | ACK | CIRCUIT DE PAROLE | CIRCUIT DE DONNÉES |

ADR/ORIGINE

ADR/DESTINATION

ACQUITTEMENT

MOTIF DE SYNCHRO

JETON

STP | STCT | STCD

FIG.4

## FIG.5

de 401    de 402

501 — STr

Tr

502 — T
RTAIL

503 — iT'1
iT'2
iT'3
iT'4
iT'5
iT'p
LT'(n-2)
iT'(n-1)
iT'n
iT'c

504

403

505

## FIG.9

416

901
902 → de 411 (FIG.4)

903
BUS
EMIS ←
904 — de 601 (FIG.6)

905
906 — de 607 (FIG.6)

0 104 991

FIG.6

# FIG.7

BUS, REC

701 — RAM

de 414 {
RR
RR FIN
RNR
REJ
RR

702 — FiFo. — ENGORG — Vers 414

708  706  707  704

703

705

BUS ADR

BUS DON

0 104 991

# FIG.8

**FIG.11**

0 104 991

# FIG.10

ET 1005

de 406

ET 1003

OU 1002

de 408

de 409

OU 1001

ET 1004

iT1   iT2   iT3   iT(n-1)   iT(n)   iT(n+1)

# FIG.12

t0

t1

t2

t3

LD

AFFR

AFFE

FIG.13

# FIG.14